# EUROPÄISCHE PATENTSCHRIFT

(11) **EP 1 702 152 B1**
(45) Veröffentlichungstag und Bekanntmachung des Hinweises auf die Patenterteilung: **09.05.2007**
(21) Anmeldenummer: 04804955.5
(22) Anmeldetag: 20.12.2004
(51) Int. Cl.: F02D 41/00, F02D 41/12, F02D 9/02, F02D 1/02, F02D 13/04

(54) **VERFAHREN UND VORRICHTUNG ZUM BETREIBEN EINER ANTRIEBSEINHEIT EINES FAHRZEUGS IM SCHUBBETRIEB**
METHOD AND DEVICE FOR OPERATING A DRIVE UNIT OF A VEHICLE IN OVERRUN
PROCEDE ET DISPOSITIF POUR FAIRE FONCTIONNER UNE UNITE D'ENTRAINEMENT D'UN VEHICULE EN DECELERATION

(30) Priorität: 20.12.2003 DE 10360340; 08.07.2004 DE 102004033081
(43) Veröffentlichungstag der Anmeldung: 20.09.2006
(73) Patentinhaber: ROBERT BOSCH GMBH, 70442 Stuttgart (DE)
(72) Erfinder: FRENZ, Thomas, 86720 Noerdlingen (DE); STREIB, Martin, 71665 Vaihingen (DE); KUFFERATH, Andreas, 74354 Besigheim (DE)
(86) Internationale Anmeldenummer: PCT/EP2004/053619
(87) Internationale Veröffentlichungsnummer: WO 2005/061875

(56) Entgegenhaltungen:
- EP-A- 0 136 544
- EP-A- 0 857 866
- EP-A- 0 866 219
- DE-A1- 4 236 009
- FR-A- 2 481 366
- US-A- 5 921 216
- PATENT ABSTRACTS OF JAPAN Bd. 010, Nr. 189 (M-494), 3. Juli 1986 (1986-07-03) & JP 61 034327 A (TOYOTA MOTOR CORP), 18. Februar 1986 (1986-02-18)
- PATENT ABSTRACTS OF JAPAN Bd. 1999, Nr. 09, 30. Juli 1999 (1999-07-30) & JP 11 117790 A (NISSAN MOTOR CO LTD), 27. April 1999 (1999-04-27)

## Beschreibung

### Stand der Technik

Die Erfindung geht von einem Verfahren und von einer Vorrichtung zum Betreiben einer Antriebseinheit eines Fahrzeugs nach der Gattung der unabhängigen Ansprüche aus.

Es sind bereits Verfahren und Vorrichtungen zum Betreiben einer Antriebseinheit eines Fahrzeugs bekannt, bei denen eine Ausgangsgröße der Antriebseinheit, beispielsweise eine Motordrehzahl oder ein Drehmoment vorgegeben wird. Bei Fahrzeugen mit Verbrennungsmotor wird beispielsweise die Luftzufuhr zum Verbrennungsmotor über ein Stellglied eingestellt. Als Stellglied wird dabei üblicherweise eine Drosselklappe verwendet.

Zum Zweck der Verbrauchseinsparang wird bei modernen Ottomotoren im Schubbetrieb wenn möglich die Einspritzung von Kraftstoff abgeschaltet. Die Drosselklappe ist dabei geschlossen. Somit ergibt sich ein hohes Bremsmoment des Verbrennungsmotors, die so genannte Motorbremse. Durch das hohe Motorbremsmoment verliert das Fahrzeug im Schubbetrieb deutlich an Geschwindigkeit. In bestimmten Fahrsituationen kann dies unerwünscht sein und der Fahrer muss nach kurzer Zeit den Schubbetrieb wieder verlassen. Wäre hier die Drosselklappe geöffnet, so würde sich ein deutlich geringeres Motorbremsmoment ergeben und das Fahrzeug könnte länger im Schubbetrieb bewegt werden.

Wird bei hoher Motordrehzahl das Fahrpedal vom Fahrer losgelassen, so geht der Motor normaler Weise in die sogenannte Schubabschaltung, d. h. den Schubbetrieb, in dem kein Kraftstoff mehr eingespritzt wird. Sobald die Motordrehzahl aber unter einen vorgegebenen Schwellwert sinkt oder wenn beispielsweise Katalysator-Schutzfunktionen die Schubabschaltung verbieten, so erfolgt wieder eine Kraftstoffeinspritzung und damit eine Drehmomenterteugung. In diesem Fall spricht man von einem befeuerten Schubbetrieb. Dies hat verschiedene Gründe:
1. Wenn die Motordrehzahl weiter schnell sinkt, würde bei Aufrechierhaltung der Schubabschaltung die Gefahr bestehen, dass der Motor ausgeht, da dann im Fall der Unterschreitung der vorgegebenen Leerlaufdrehzahl nicht schnell genug Drehmoment aufgebaut werden kann.
2. Im Leerlaufbetrieb muss der Motor gerade soviel Drehmoment aufbringen, wie zur Kompensation der Verlustmomente, die sich beispielsweise aufgrund von Reibung oder dem Betrieb von Nebenaggregaten ergeben, notwendig ist. Wenn die Motordrehzahl nur geringfügig über der vorgegebenen Leerlaufdrehzahl liegt, kann das Drehmoment nicht schlagartig auf Null heruntergefahren werden, da ansonsten der Leerlaufregelkreis instabil würde.
3. Wenn der Fahrer das Fahrpedal loslässt, kann das bedeuten, dass er möglichst schnell anhalten möchte. In diesem Fall wäre es wünschenswert, dass unter Beachtung der motorischen und regelungstechnischen Randbedingungen das geringst mögliche Drehmoment eingestellt wird. Es kann aber auch bedeuten, das der Fahrer mit dem Schwung, den das Fahrzeug noch hat, möglichst lange rollen möchte. In diesem Fall wäre es wünschenswert, dass der verbrannte Kraftstoff möglichst wirkungsgrad optimal in kinetische Energie umgesetzt wird. Es kann sogar wünschenswert sein, eine erhöhte Luft- und Kraftstoffmenge zu verbrennen.

Mittels der Fahrzeugapplikationsdaten ist für alle Fälle einheitlich festgelegt, welche Füllung und welcher Zundwinkelwirkungsgrad eingestellt wird, wenn der befeuerte Schubbetrieb vorliegt. Dies ist in verschiedenen Fahrsituationen nicht optimal.

Es kann vorkommen, dass der Fahrer z. B. aufgrund einer roten Ampel anhalten will. Aufgrund einer auf gutes Rollverhalten ausgelegten Applikation wird in diesem Fall unnötig Drehmoment aufgebaut, das sofort über verstärktes Bremsen wieder kompensiert wird. Dies führt zu unnötigem Kraftstoffverbrauch und nebenbei zu einem erhöhten Bremsenverschleiß. Oder der Fahrer möchte den Schwung des Fahrzeugs möglichst lange zum Rollen nutzen. Wenn der befeuerte Schubbetrieb aber auf minimales Moment ausgelegt ist, wird der Zündwinkel auf den spätest möglichen Wert gezogen, d. h., das Gemisch wird mit schlechtem Wirkungsgrad verbrannt. Der Fahrer muss die damit verbundene erhöhte Verzögerung dadurch kompensieren, dass er früher wieder Gas gibt, was ebenfalls verbrauchserhöhend wirkt.

Ein Verfahren und eine Vorrichtung gemäß dem Oberbegriff der unabhängigen Ansprüche 1 bis 18 sind z.B. aus DE 42 36 009 A bekannt.

### Vorteile der Erfindung

Das erfindungsgemäße Verfahren und die erfindungsgemäße Vorrichtung zum Betreiben einer Antriebseinheit eines Fahrzeugs mit den Merkmalen der unabhängigen Ansprüche haben demgegenüber den Vorteil, dass für den Schubbetrieb der Antriebseinheit mindestens zwei voreingestellte Fahrstrategien vorgegeben werden und das in dem Schubbetrieb eine der vorgegebenen Fahrstrategien abhängig von einer Fahrsituation ausgewählt wird. Auf diese Weise kann für den Schubbetrieb der Antriebseinheit diejenige Fahrstrategie ausgewählt werden, die für die aktuelle Fahrsituation am Besten geeignet ist, beispielsweise im Hinblick auf die Erzielung eines möglichst geringen Kraftstoffverbrauchs.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft: ist es, wenn bei Vorliegen einer ersten Fahrsituation eine erste Fahrstratagie gewählt wird, bei der der Zündwinkel in Richtung spät verstellt und/oder die Getriebeübersetzung verringert wird und wenn bei Vorliegen einer zweiten Fahrsituation eine zweite Fahrstrategie gewählt wird, bei der der Zündwinkel in Richtung früh verstellt und/oder die Getriebeübersetzung erhöht wird. Auf diese Weise lässt sich mit Hilfe der ersten Fahrstrategie die Ausgangsgröße der Antriebseinheit für einen Verzögerungsbetriebsmodus des Fahrzeugs verringern und mit Hilfe der zweiten Fahrstrategie lässt sich die Ausgangsgröße der Antriebseinheit zur Realisierung eines Rollbetriebsmodus des Fahrzeugs beibehalten oder sogar erhöhen.

Besonders vorteilhaft ist es, wenn die Fahrsituation durch Auswertung eines Gradienten einer von einer Betätigung eines Bedienelementes abgeleiteten Größe oder einer von einer Vorgabe für die Ausgangsgröße der Antriebseinheit abgeleiteten Größe ermittelt wird und die erste Fahrsituation erkannt wird, wenn ein vorgegebener Schwellwert durch den Gradienten unterschritten wird und die zweite Fahrsituation erkannt wird, wenn der vorgegebene Schwellwert durch den Gradienten überschritten wird. Auf diese Weise lässt sich die Fahrsituation besonders zuverlässig anhand des Fahrerwunsches ermitteln.

Ein weiterer Vorteil ergibt sich, wenn der einzustellende Zündwinkel und/oder einzustellende Getriebeübersetzung abhängig vom Gradienten der von der Betätigung des Bedienelementes abgeleiteten Größe oder der von der Vorgabe für die Ausgangsgröße der Antriebseinheit abgeleiteten Größe mittels jeweils einer Kennlinie oder jeweils eines Kennfeldes ermittelt wird. Auf diese Weise lässt sich die Stellgröße bzw. lassen sich die Stellgrößen differenzierter in Abhängigkeit der Fahrsituation einstellen.

Ein weiterer Vorteil ergibt sich, wenn die Fahrsituation durch Auswertung einer Betätigung eines Bremspedals ermittelt wird und die erste Fahrsituation erkannt wird, wenn das Bremspedal gedrückt ist und die zweite Fahrsituation erkannt wird, wenn das Bremspedal losgelassen ist. Auf diese Weise lässt sich die Fahrsituation ebenfalls besonders zuverlässig und einfach ermitteln.

Ein weiterer Vorteil ergibt sich, wenn die Fahrsituation durch Auswertung einer Information über eine Neigung des Fahrzeugs gegenüber der Horizontalen ermittelt wird und die erste Fahrsituation bei betragsmäßigen Überschreiten eines vorgegebenen Schwellwertes durch die Neigung erkannt wird und die zweite Fahrsituation bei betragsmäßigem Unterschreiten des vorgegebenen Schwellwertes durch die Neigung erkannt wird. Auf diese Weise lässt sich die Fahrsituation unabhängig vom Fahrerwunsch ermitteln.

Die Zuverlässigkeit bei der Ermittlung der Fahrsituation kann dadurch gesteigert werden, dass die Fahrsituation durch Auswertung einer Fahrgeschwindigkeit oder eines vorausfahrenden Fahrzeugs oder eines erkannten Hindernisses auf der Fahrbahn oder einer Verkehrsführung ermittelt wird. Auch diese Ermittlung der Fahrsituation ist unabhängig vom Fahrerwunsch. Die Zuverlässigkeit bei der Ermittlung der Fahrsituation kann weiterhin dadurch gesteigert werden, dass die erste Fahrsituation erkannt wird, wenn innerhalb einer vorgegebenen Zeit eine Getrieberückschaltung erkannt wird und andernfalls die zweite Fahrsituation erkannt wird. Im Falle eines Automatikgetriebes lässt sich die Zuverlässigkeit bei Ermittlung der Fahrsituation dadurch steigern, dass die erste Fahrsituation erkannt wird, wenn bei einem Automatikgetriebe die Position eines Wählhebels oder eines diesem entsprechenden Bedienelementes in einer anderen Stellung als "Drive" bzw. "D" steht und andernfalls die zweite Fahrsituation erkannt wird. Vorteilhaft ist weiterhin, wenn bei Detektion eines Fehlers an einer sicherheitsrelevanten Komponente des Fahrzeugs oder der Antriebseinheit der Zündwinkel in Richtung spät verschoben und/oder die Getriebeübersetzung verringert wird. Auf diese Weise wird sichergestellt, dass ein fehlerhafter und sicherheitskritischer Betrieb des Fahrzeugs vermieden wird.

Ein weiterer Vorteil ergibt sich, wenn eine Wahrscheinlichkeit für das Vorliegen der ersten Fahrsituation oder der zweiten Fahrsituation abhängig davon ermittelt wird, welche Bedingung oder welche Bedingungen für das Erkennen der entsprechenden Fahrsituation vorliegen und die erste Fahrsituation oder die zweite Fahrsituation nur erkannt wird, wenn die entsprechende Wahrscheinlichkeit für deren Vorliegen einen vorgegebenen Schwellwert überschreitet. Auf diese Weise wird berücksichtigt, dass bei der Ermittlung der Fahrsituation aufgrund einer oder mehrerer der genannten Bedingungen eine fehlerhafte Interpretation einer solchen Bedingung im Hinblick auf die aktuell vorliegende Fahrsituation auftreten kann. Dabei lässt sich unter Berücksichtigung der Wahrscheinlichkeit für das Vorliegen der ersten Fahrsituation oder der zweiten Fahrsituation auch eine oder mehrere Fahrstrategien als Kompromiss zwischen der ersten Fahrstrategie und der zweiten Fahrstrategie realisieren. Dies erlaubt eine differenziertere Anpassung der verwendeten Fahrstrategie an die aktuelle Fahrsituation.

Vorteilhaft ist es weiterhin, wenn für die Ausgangsgröße bei Auswahl der ersten Fahrstrategie ein Minimalwert vorgegeben wird. Auf diese Weise lässt sich der gewünschte Verzögerungsmodus besonders einfach und zuverlässig realisieren.

Vorteilhaft ist weiterhin, wenn durch die erste Fahrstrategie die Ausgangsgröße der Antriebseinheit reduziert wird und durch die zweite Fahrstrategie die Ausgangsgröße der Antriebseinheit beibehalten oder erhöht wird. Auf diese Weise lässt sich besonders einfach die erste Fahrstrategie für den Verzögerungsmodus und die zweite Fahrstrategie für den Rollmodus des Fahrzeugs verwenden.

### Zeichnung

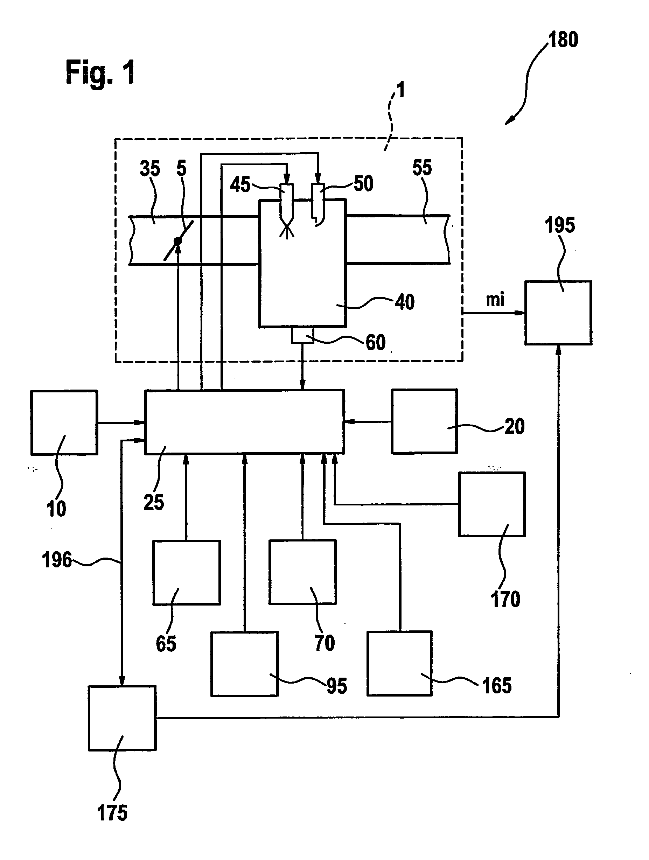

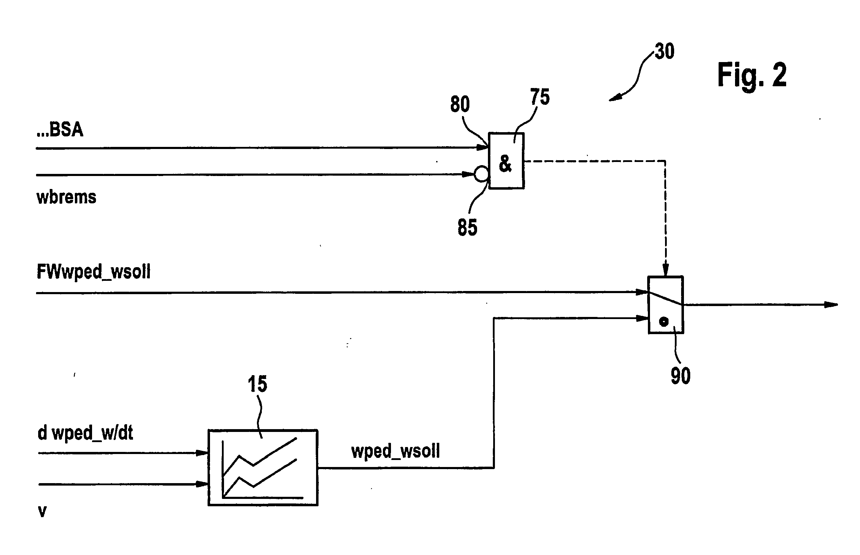

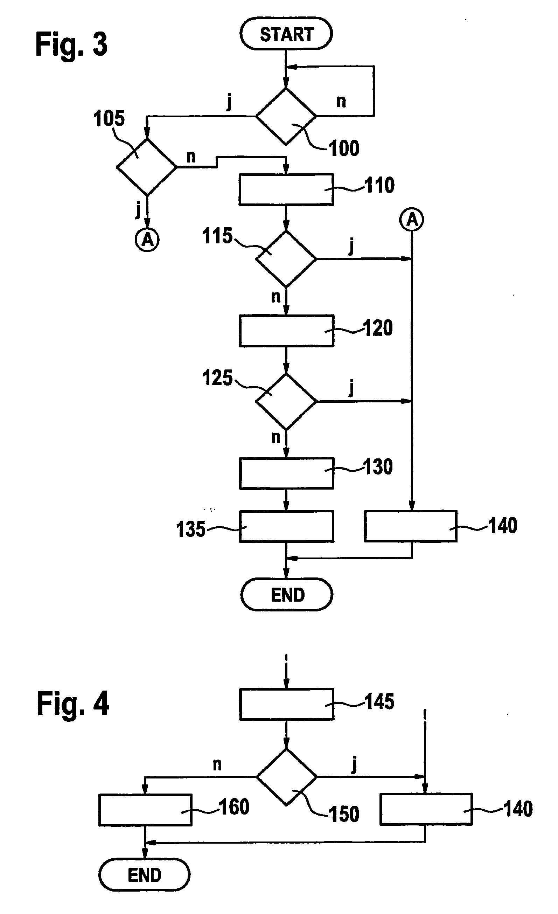

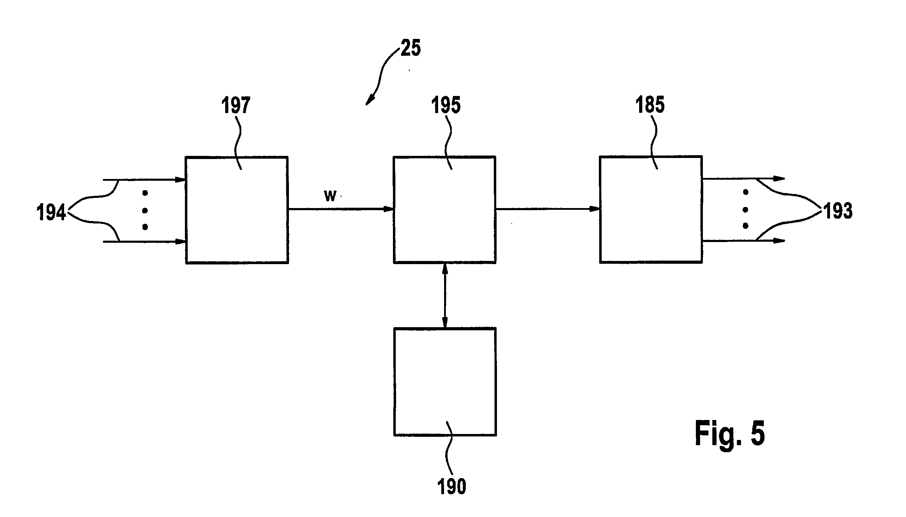

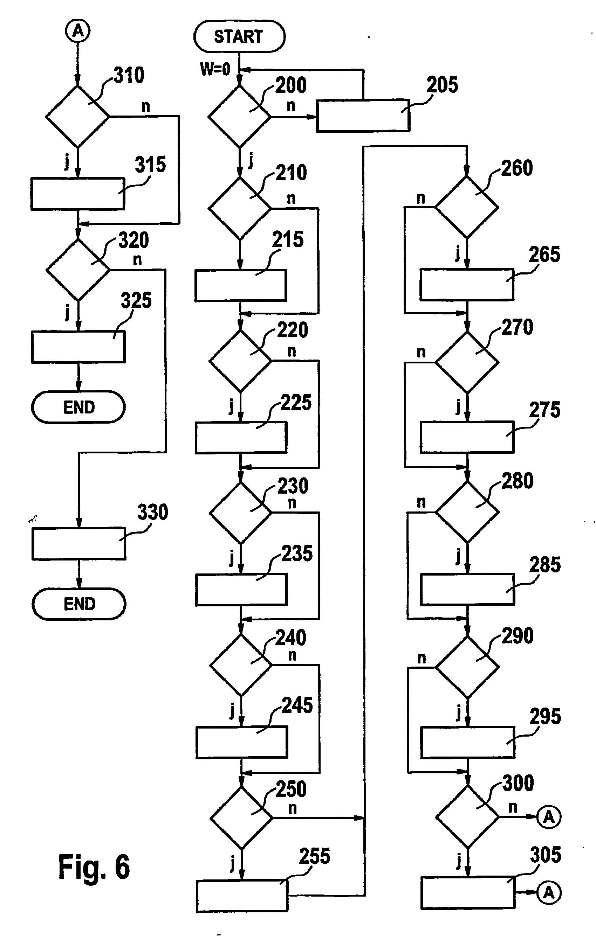

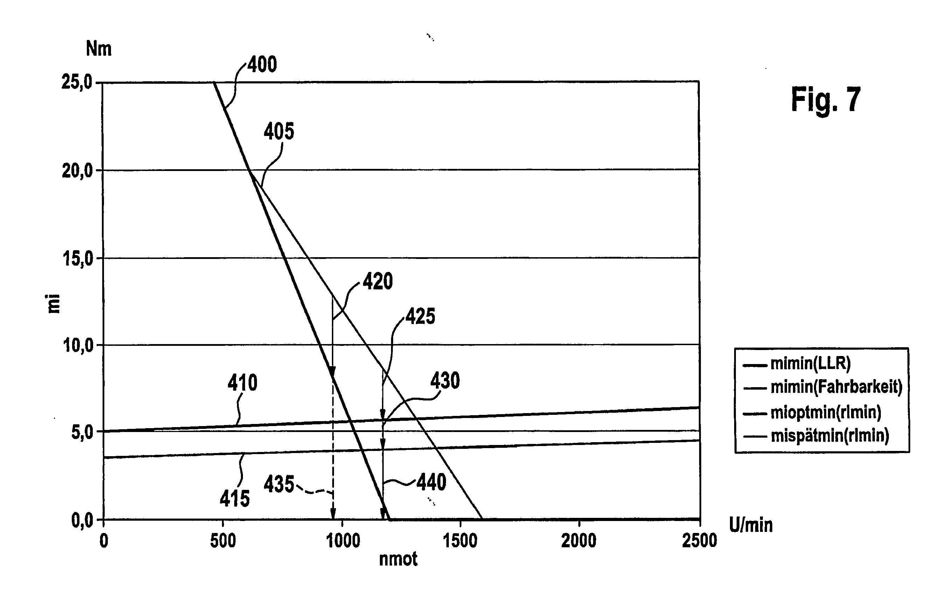

Ausführungsbeispiele der Erfindung sind in der Zeichnung dargestellt und in der nachfolgenden Beschreibung näher erläutert. Es zeigen Figur 1 ein Blockschaltbild einer Antriebseinheit eines Fahrzeugs mit Verbrennungsmotor, Figur 2 ein Funktionsdiagramm einer beispielhaften Realisierung des erfindungsgemäßen Verfahrens und der erfindungsgemäßen Vorrichtung, Figur 3 einen Ablaufplan für einen beispielhaften Ablauf des erfindungsgemäßen Verfahrens, Figur 4 einen Alternativablaufplan zum Ablaufplan nach Figur 3, Figur 5 ein Blockschaltbild für die Auswahl einer gewünschten Fahrstrategie, Figur 6 einen Ablaufplan für die Auswahl einer gewünschten Fahrstrategie und Figur 7 ein Diagramm eines Drehmoments einer Antriebseinheit eines Fahrzeugs über einer Motordrehzahl der Antriebseinheit zur Verdeutlichung der Funktionsweise des erfindungsgemäßen Verfahrens und der erfindungsgemäßen Vorrichtung.

### Beschreibung der Ausführungsbeispiele

In Figur 1 kennzeichnet 180 eine Antriebseinheit eines Fahrzeugs. Die Antriebseinheit 180 umfasst einen Verbrennungsmotor 1, der beispielsweise als Ottomotor oder als Dieselmotor ausgebildet sein kann. Im Folgenden wird beispielhaft angenommen, dass der Verbrennungsmotor 1 als Ottomotor ausgebildet ist. Der Verbrennungsmotor 1 umfasst einen oder mehrere Zylinder 40, deren Brennraum über eine Luftzufuhr 35 Verbrennungsluft zugeführt wird. In der Luftzufuhr 35 ist ein Stellglied 5 angeordnet, das in diesem Beispiel als elektronisch gesteuerte Drosselklappe ausgebildet sein soll und deren Öffnungsgrad von einer Motorsteuerung 25 eingestellt wird. Auf diese Weise lässt sich die Zylinderfüllung in Abhängigkeit des Öffnungsgrades der Drosselklappe 5 einstellen bzw. beeinflussen. Im Falle einer Direkteinspritzung von Kraftstoff in die einzelnen Zylinder 40, wie in Figur 1 angedeutet, wird der Kraftstoff in den Brennraum des entsprechenden Zylinders direkt über jeweils ein Einspritzventil 45 eingespritzt, wobei die Einspritzmenge und die Einspritzzeit ebenfalls von der Motorsteuerung 25 vorgegeben wird. Alternativ könnte die Einspritzung von Kraftstoff auch in den als Saugrohr bezeichneten Abschnitt der Luftzufuhr 35 zwischen der Drosselklappe 5 und den in Figur 1 aus Gründen der Übersichtlichkeit nicht dargestellten Einlassventilen der Zylinder 40 erfolgen. Das im Brennraum der Zylinder 40 gebildete Luft-/Kraftstoffgemisch wird über jeweils eine Zündkerze 50 pro Zylinder 40 gezündet, wobei die Zündkerzen 50 hinsichtlich ihres Zündzeitpunktes ebenfalls von der Motorsteuerung 25 angesteuert werden. Das bei der Verbrennung des Luft-/Kraftstoffgemisches entstandene Abgas wird über einen Abgasstrang 55 ausgestoßen. Im Bereich der Zylinder 40 ist ein Drehzahlsensor 60 angeordnet, der die Drehzahl des Verbrennungsmotors 1 in dem Fachmann bekannter Weise erfasst und den Messwert an die Motorsteuerung 25 weiterleitet. Ferner ist ein Geschwindigkeitssensor 65 vorgesehen, der die Fahrgeschwindigkeit des Fahrzeugs in dem Fachmann bekannter Weise erfasst und den Messwert an die Motorsteuerung 25 weiterleitet. Ferner ist gemäß Figur 1 ein Neigungssensor 70 vorgesehen, in der in dem Fachmann bekannter Weise die Neigung des Fahrzeugs gegenüber der Horizontalen erfasst und den Messwert an die Motorsteuerung 25 weiterleitet. Ferner ist ein Bedienelement, in diesem Beispiel ein Fahrpedal vorgesehen, dessen Betätigungsgrad oder Pedalwinkel von einem Fahrpedalmodul 10 erfasst und ebenfalls der Motorsteuerung 25 mitgeteilt wird. Ferner ist ein Bremspedal vorgesehen, dessen Betätigungsgrad von einem Bremspedalmodul 20 erfasst und ebenfalls der Motorsteuerung 25 mitgeteilt wird. Optional und wie in Figur 1 dargestellt kann es weiterhin vorgesehen sein, dass die Motorsteuerung 25 Informationen von einer Navigationseinheit 95 erhält. Weiterhin kann die Motorsteuerung 25 optional und wie in Figur 1 dargestellt mit einem Fahrgeschwindigkeitsregler 165, insbesondere einem adaptiven Fahrgeschwindigkeitsregler, verbunden sein. Weiterhin können der Motorsteuerung 25 optional und wie in Figur 1 dargestellt Signale einer Bildverarbeitungseinheit 170 zugeführt werden. Eine Ausgangsgröße des Verbrennungsmotors 1, insbesondere ein Drehmoment oder eine Leistung, werden über ein Getriebe 199 mit der Getriebeübersetzung ü an in Figur 1 nicht dargestellte Antriebsräder des Fahrzeugs weiter gegeben. Im Folgenden soll beispielhaft angenommen werden, dass es sich bei der Ausgangsgröße des Verbrennungsmotors um ein Drehmoment mi handelt. Das Getriebe 199 wird gemäß Figur 1 von einer Getriebesteuerung 175 in dem Fachmann bekannter Weise gesteuert, wobei die Getriebesteuerung 175 über eine Schnittstelle 196, die beispielsweise als CAN-Bus ausgebildet ist, mit der Motorsteuerung 25 Signale austauscht.

Erfindungsgemäß ist es nun vorgesehen, dass in einem Schubbetrieb der Antriebseinheit 180 des Fahrzeugs Fahrsituationen unterschieden werden, in denen ein hohes Motorbremsmoment bzw. ein niedriges Motorbremsmoment gewünscht wird. Allgemein sind für den Schubbetrieb mindestens zwei voreingestellte Fahrstrategien in der Motorsteuerung 25 vorgegeben, wobei im Schubbetrieb eine dieser vorgegebenen Fahrstrategien abhängig von der aktuellen Fahrsituation nach Loslassen des Fahrpedals zur Umsetzung ausgewählt wird. In Abhängigkeit der erkannten Fahrsituation wird dann die entsprechend für diese Fahrsituation vorgegebene Fahrstrategie von der Motorsteuerung 25 ausgewählt und umgesetzt.

Erfindungsgemäß ist es vorgesehen, unter Berücksichtigung des wahrscheinlichen Fahrerwunsches möglichst eine optimale Entscheidung zwischen minimalem Drehmoment, also optimaler Verzögerung, gutem Rollverhalten und geringem Kraftstoffverbrauch des Fahrzeugs zu treffen. Dazu kann die Motorsteuerung 25 wie in Figur 5 anhand eines Blockschaltbildes dargestellt Wahrscheinlichkeitsermittlungsmittel 197 umfassen, denen Eingangsgrößen 194 zugeführt sind. Diese Eingangsgrößen 194 sind dabei die Signale, die der Motorsteuerung 25 gemäß Figur 1 vom Drehzahlsensor 60, vom Fahrpedalmodul 10, vom Bremspedalmodul 20, von der Getriebesleuerung 175, vom Geschwindigkeitssensor 65, vom Neigungssensor 70, von der Navigationseinheit 95, von der adaptiven Fahrgeschwindigkeitsregelung 165 und/oder von der Bildverarbeitungseinheit 170 zugeführt werden. Aus diesen Größen ermittelt die Wahrscheinlichkeitsermittlungseinheit 197 wie später noch erläutert wird, einen Wahrscheinlichkeitswert W, der an Auswahlmittel 195 weitergeleitet wird. Die Auswahlmittel 195 sind außerdem mit Vorgabemitteln 190 verbunden, in denen die vorgegebenen voreingestellten Fahrstrategien in Zuordnung zu jeweils einem Bereich für den Wahrscheinlichkeitswert W abgelegt sind. Je nach dem, welchen Wahrscheinlichkeitswert W die Auswahlmittel 195 empfangen, wählen die Auswahlmittel 195 die diesem Wahrscheinlichkeitswert W zugeordnete vorgegebene Fahrstrategie aus den Vorgabemitteln 190 aus und leiten sie an Einstellmittel 185 weiter. Die Einstellmittel 185 setzen dann mit Hilfe von Stellgrößen 193 die ausgewählte Fahrstrategie um. Bei den Stellgrößen kann es sich um die Luftzufuhr zum Verbrennungsmotor 1, um den Zündwinkel, um die Kraftstoffzufuhr zum Verbrennungsmotor 1 und/oder um eine Getriebeübersetzung handeln. Die Luftzufuhr wird dabei mit Hilfe der Drosselklappe 5, der Zündwinkel mit Hilfe der Zündkerzen 50, die Kraftstoffzufuhr mit Hilfe der Einspritzventile 45 und die Getriebeübersetzung mit Hilfe der Getriebesteuerung 175 in dem Fachmann bekannter Weise umgesetzt.

Im Folgenden soll beispielhaft angenommen werden, dass zwischen zwei vorgegebenen voreingestellten Fahrstrategien für den Schubbetrieb ausgewählt werden kann. Zum Einen ist dies eine erste Fahrstrategie, mit der das Fahrzeug verzögert werden soll, und zum Anderen eine zweite Fahrstrategie, mit der ein Rollen des Fahrzeugs möglichst ohne Bremswirkung erwünscht ist.

In einem sogenannten befeuerten Schubbetrieb ist das Fahrpedal losgelassen, das Fahrzeug rollt, aber Schubabschaltung, d. h. die Unterbrechung der Kraftstoffzufuhr, ist nicht erlaubt. Der Grund dafür ist beispielsweise in einer zu niedrigen Motordrehzahl zu finden oder aus Gründen des Schutzes oder des Aufheizens eines in Figur 1 nicht dargestellten Katalysators im Abgasstrang 55, aufgrund von aktiven Diagnosefunktionen, und so weiter. Aus der Stellung von Bedienelementen des Fahrzeugs, wie dem Fahrpedal und/oder dem Bremspedal oder aus sonstigen Fahrzeuginformationen, wie sie beispielsweise vom Drehzahlsensor 60, von der Getriebesteuerung 175, vom Geschwindigkeitssensor 65, vom Neigungssensor 70, von der adaptiven Fahrgeschwindigkeitsregelung 165, von der Navigationseinheit 95 und/oder von der Bildverarbeitungseinheit 170 herrühren können, wird bei losgelassenem Fahrpedal und rollendem Fahrzeug von den Wahrscheinlichkeitsermittlungsmitteln 197 der Wahrscheinlichkeitswert W ermittelt und dabei interpretiert, ob es wahrscheinlicher ist, dass die erste Fahrstrategie ausgewählt werden soll, d. h. ein Anhaltewunsch des Fahrers vorliegt, oder mit höherer Wahrscheinlichkeit ein Rollen des Fahrzeugs möglichst ohne Bremswirkung erwünscht ist.

Für den Fall, dass die Auswahlmittel 195 die erste Fahrstrategie auswählen, bei der das Fahrzeug bestmöglich verzögert werden soll, um das Fahrzeug möglichst anzuhalten, kann durch entsprechende Ansteuerung der Drosselklappe 5 eine möglichst niedrige dem Verbrennungsmotor 1 zuzuführende Luftmenge eingestellt werden, die sich aus dem verbrennungstechnisch möglichen Minimum und dem Kriterium der Stabilität einer Leerlaufregelung der Antriebseinheit 180 sowie einer eventuell aus Gründen der Leerlaufregelung notwendigen zu bildenden Momentenreserve ergibt. Es erfolgt aber keine Erhöhung der der Brennkraftmaschine 1 zuzuführende Luftmenge über diesen Wert hinaus. Auf diese Weise wird der Verzögerungswunsch des Fahrers unterstützt. Die Kraftstoffzufuhr wird dabei durch entsprechende Ansteuerung der Einspritzventile 45 zur Einhaltung eines vorgegebenen Wertes für das Luft-/Kraftstoffgemischverhältnis eingestellt. Aufgrund der minimalen Luftmenge ergibt sich dabei auch ein minimaler Kraftstoffverbrauch.

Optional kann auch der Zündwinkel auf seinen spätest möglichen Wert gesetzt werden. Damit wird das Luft-/Kraftstoffgemisch im Zylinder 40 mit schlechtem Wirkungsgrad verbrannt, wodurch der Verzögerungswunsch des Fahrers weiter unterstützt wird. Bei Fahrzeugen mit Automatikgetriebe kann hierdurch trotz des schlechten Wirkungsgrades paradoxer Weise sogar Kraftstoff gespart werden. Wegen des Wandlerschlupfs sinkt durch das niedrigere Drehmoment die Motordrehzahl. Wenn die Füllung des Zylinders 40 pro Arbeitstakt konstant gehalten wird, so reduziert sich der Durchsatz des Luft-/Kraftstoffgemisches durch den Zylinder 40 pro Zeiteinheit aufgrund der niedrigeren Motordrehzahl und damit wird auch der Kraftstoffverbrauch reduziert. Der schlechte Wirkungsgrad der Verbrennung aufgrund des verzögerten Zündwinkels fällt nicht ins Gewicht, wenn man von einem tatsächlichen Verzögerungswunsch des Fahrers ausgeht. Bei besserem Wirkungsgrad würde der Fahrer dies durch stärkere Betätigung des Bremspedals kompensieren.

Im Falle eines Dieselmotors kann die erste Fahrstrategie anstelle durch Reduzierung der Luftzufuhr zum Verbrennungsmotor 1 durch Reduzierung der Kraftstoffzufuhr zum Verbrennungsmotor 1 durch entsprechende Ansteuerung der Einspritzventile 45 realisiert werden.

Wenn die Auswahlmittel 195 die zweite Fahrstrategie auswählen, wonach das Fahrzeug bei möglichst geringer Bremswirkung, möglichst sogar ohne Bremswirkung im Schubbetrieb rollen soll, so kann dies von den Einstellmitteln 185 dadurch realisiert werden, dass der Zündwinkel auf einen Wert mit möglichst hohem Wirkungsgrad gesetzt wird, bevorzugt auf den Optimalwert. Im Vergleich zur ersten Fahrstrategie ist dabei der Zündwinkel nach früh verstellt. Ggf. könnte auch ein etwas schlechterer Wirkungsgrad durch Verzögerung des Zündwinkels eingestellt werden, wenn z. B. bei sehr niedriger Drehzahl die Leerlaufregelung eine Momentenreserve anfordert, oder wenn dies wegen des Heizens des Katalysators oder aufgrund von aktiven Diagnosefunkrionen gefordert wird. Aber selbst in diesen Fällen sollte der Zündwinkelwirkungsgrad dann in der Regel höher sein, als im Falle der ersten Fahrstrategie mit spätest möglichem Zündwinkel. Der hohe Zündwinkelwirkungsgrad unterstützt den Rollwunsch des Fahrers und sorgt dafür, dass die im Kraftstoff steckende Energie optimal in kinetische Energie des Fahrzeugs umgesetzt wird. Dies sorgt für minimalen Kraftstoffverbrauch.

Optional kann in einem solchen Fall auch abweichend von der gemäß der ersten Fahrstrategie geschilderten minimalen Luftmenge zum Verbrennungsmotor 1 abgewichen werden und auch bei losgelassenem Fahrpedal eine etwas höhere Luftzufuhr und damit, zur Einhaltung eines vorgegebenen Wertes für das Luft-/Kraftstoffgemischverhältnis, eine höhere dem Verbrennungsmotor 1 zugeführte Kraftstoffmenge eingestellt werden. Auf diese Weise wird das innere Motormoment mi als Ausgangsgröße der Antriebseinheit 180 sogar noch erhöht. Dies unterstützt den Rollwunsch des Fahrers zusätzlich. Geht man davon aus, dass tatsächlich kein Verzögerungswunsch, sondern ein Rollwunsch des Fahrers existiert, wirkt dies nicht verbrauchserhöhend. Ohne die Luftmengenerhöhung müsste der Fahrer dafür früher wieder auf das Gaspedal treten um das Rollen des Fahrzeugs mit der gewünschten Geschwindigkeit aufrecht zu erhalten.

Im Folgenden wird beschrieben, wie zwischen einem Verzögerungswunsch und einem Rollwunsch des Fahrers unterschieden werden kann. Die einfachste Möglichkeit ist es dabei, dass man von einem Verzögerungswunsch ausgeht, wenn das Bremspedal betätigt ist, und von einem Rollwunsch ausgeht, wenn das Bremspedal nicht betätigt ist. Man kann alternativ oder zusätzlich auch auf einen Verzögerungswunsch schließen, wenn das Fahrpedal sehr schnell losgelassen wird, während man bei einem vergleichsweise langsamen Loslassen des Fahrpedals von einem Rollwunsch ausgeht. Zusätzlich oder alternativ kann auf einen Verzögerungswunsch geschlossen werden, wenn der Fahrer innerhalb einer vorgegebenen Zeit vor Aktivierung des Schubbetriebes eine Rückschaltung des Getriebes 199 vorgenommen hat oder mit einem gemessen an der Fahrgeschwindigkeit niedrigen Gang fährt oder im Falle eines Automatikgetriebes eine andere Wählhebelstellung als "Drive" bzw. "D" eingestellt hat. Zusätzlich oder alternativ kann man von einem Verzögerungswunsch auch bei Vorliegen eines starken Gefälles der aktuell befahrenen Fahrbahn ausgegangen werden. Die Steigung bzw. das Gefälle kann in dem Fachmann bekannter Weise beispielsweise durch Vergleich zwischen dem Raddrehmoment und der Radbeschleunigung ermittelt werden. Zusätzlich oder alternativ können Informationen von Fahrerassistenz-Systemen einbezogen werden, wie im Falle der adaptiven Fahrgeschwindigkeitsregelung 165 dem Abstand zu einem vorausfahrenden Fahrzeug oder der Annäherungsgeschwindigkeit an ein vorausfahrendes Fahrzeug. Zusätzlich oder alternativ können auch Informationen von der Navigationseinheit 95 einbezogen werden, in dem z. B. vor scharfen Kurven oder vor Kreuzungen auf einen Verzögerungswunsch geschlossen wird.

In Figur 7 ist ein Diagramm des Ausgangsdrehmomentes mi des Verbrennungsmotors 1 über der Motordrehzahl nmot dargestellt. Das Ausgangsdrehmoment mi des Verbrennungsmotors 1 wird auch als inneres Moment oder inneres Motormoment bezeichnet. Das in Figur 7 dargestellte Diagramm veranschaulicht die Auswirkung der Auswahl einer der beiden Fahrstrategien auf das Verhältnis von innerem Moment mi und Motordrehzahl nmot bzw. zeigt den Spielraum für dieses Verhältnis bei der Auswahl einer der beiden Fahrstrategien an. Die mit dem Bezugszeichen 400 gekennzeichnete Linie im Diagramm nach Figur 7 symbolisiert das minimale innere Motormoment mi, dass aus Gründen der regelungstechnischen Stabilität der Leerlaufregelung eingestellt werden kann. Die mit dem Bezugszeichen 405 gekennzeichnete Linie, die bis zu einer Motordrehzahl nmot von etwa 600 Umdrehungen pro Minute, bei der ein inneres Moment mi von etwa 20 Nm erreicht wird, der Linie 400 entspricht und für größere Motordrehzahlen nmot zu größeren inneren Momenten mi hin abweicht, symbolisiert ein minimales inneres Motormoment mi im Hinblick auf die Fahrbarkeit des Fahrzeugs. Das im Vergleich zur Linie 400 erhöhte innere Motormoment mi der Linie 405 dient dazu, die Fahrzeugverzögerung bei losgelassenem Fahrpedal zu reduzieren, um ein angenehmeres Fahrverhalten bei niedrigeren Geschwindigkeiten zu erzielen. Außerdem verbessert der auf diese Weise gegenüber der Linie 400 angehobene Minimalwert das Anfahrverhalten des Fahrzeugs bei geringer Fahrpedalbetätigung, Wenn man beispielsweise beim Anfahren des Fahrzeugs eine Fahrpedalstellung von 5% vorgibt, so stellt der Verbrennungsmotor 1 bei angenommener beispielsweise linearer Skalierung ein inneres Motormoment mi ein, das bezogen auf den einstellbaren Momentenhub 5% oberhalb des gemäß Figur 7 dargestellten drehzahlabhängigen minimalen inneren Motormomentes mi gemäß der Linie 400 liegt Während des Anfahrvorgangs steigt die Motordrehzahl nmot. Wenn nun der Minimalwert des inneren Motormomentes mi gemäß der Linie 400 mit steigender Drehzahl nmot sehr steil abfällt, fällt natürlich auch das aufgrund der Fahrpedalbetätigung von 5% eingestellte innere Motormoment mi entsprechend steil ab. Dieses innere Motormoment mi entspricht dabei der Summe aus dem der aktuellen Motordrehzahl nmot zugeordneten Minimalwert des inneren Motormomentes mi gemäß der Linie 400 plus 5% bezogen auf den bei maximaler also 100%iger Betätigung des Fahrpedals einstellbaren Momentenhub. Somit schnürt sich das Fahrzeug beim Anfahren das innere Motormoment mi sozusagen selbst ab. Dieses Verhalten wird bei Verwendung der Linie 405 für Drehzahlen oberhalb etwa 600 Umdrehungen pro Minute erheblich abgemildert, weil in diesem Drehzahlbereich die Linie 405 ein größeres inneres Motormoment mi zur Verfügung stellt als die Linie 400.

Somit ist die Linie 400 allein durch die Stabilität der Leerlaufregelung begrenzt, wohingegen die Linie 405 durch die üblicher Weise beim Anfahren auftretende charakteristische Betätigung des Fahrpedals durch den Fahrer im Hinblick auf ein möglichst angenehmes Fahrverhalten bei niedrigen Geschwindigkeiten begrenzt ist. Die Linie 405 lässt sich dabei beispielsweise auf einem Prüfstand applizieren und in der Motorsteuerung 25 ablegen.

Die Linie 410 resultiert daraus, dass man die dem Verbrennungsmotor 1 zugeführte Luftmenge nicht beliebig klein machen kann. Erstens ist die Drosselklappe 5 in der Regel gar nicht dicht genügt, um dies zu ermöglichen, und zweitens kann ein zu niedriger Saugrohrdruck aufgrund einer zu geringen dem Verbrennungsmotor 1 zugeführten Luftmenge auch dazu führen, dass Öl durch Dichtungsringe in den Brennraum des Zylinders 40 gezogen wird und so der bekannte "Blaurauch" entsteht. Daher wird beispielsweise auf einem Prüfstand eine Schwelle appliziert, die eine drehzahlabhängige Mindestlufunenge vorgibt. Im befeuerten Betrieb des Verbrennungsmotors 1 folgt hieraus bei vorgegebenem Wert für das Luft-/Kraftstoffgemischverhältnis eine Mindest-Kraftstoffmenge, die wiederum unter Annahme eines optimalen Zündwinkels in dem Verlauf des inneren Moments mi gemäß der Linie 410 über der Drehzahl nmot resultiert

Durch Einstellen eines gegenüber dem optimalen Zündwinkel späteren Zündwinkels kann die Motorsteuerung 25 aber auch bei der minimalen Luftmenge ein gegenüber dem inneren Moment mi gemäß der Linie 410 reduziertes inneres Moment mi einstellen. Beim spätest möglichen Zündwinkel resultiert dabei ein Verlauf des inneren Moments mi über der Drehzahl nmot gemäß der Linie 415, die im Vergleich zur Linie 410 über den gesamten Drehzahlbereich niedrigere innere Momente mi hervorbringt. Auch die Linien 410 und 415 können entsprechend beispielsweise auf einem Prüfstand appliziert werden und in der Motorsteuerung 25 abgelegt werden.

Bei losgelassenem Fahrpedal empfiehlt sich je nach dem, ob ein Verzögerungswunsch oder ein Rollwunsch des Fahrers angenommen wird die folgende Betriebsstrategie für die Antriebseinheit 180:

Bei mit hoher Wahrscheinlichkeit vorliegendem Rollwunsch des Fahrers wird ein inneres Motormoment mi eingestellt, das abhängig von der Motordrehzahl nmot der Linie 405 und damit dem minimalen inneren Motormoment mi im Hinblick auf die Fahrbarkeit folgt. Der Zündwinkel wird dabei möglichst auf den optimalen Wirkungsgrad eingestellt, wobei dieser Wirkungsgrad durch Spätverstellung des Zündwinkels ggf. vermindert werden kann, um notwendige Momentenreserven zur Verfügung zu stellen.

Ist die Wahrscheinlichkeit für den Rollwunsch des Fahrers geringer, so dass nicht mehr ganz sicher von einem Rollwunsch des Fahrers ausgegangen werden kann, kann man entsprechend den mit den Bezugszeichen 420, 425 markierten Pfeilen in Figur 7 ein inneres Motormoment mi einstellen, das sich aus dem Maximum der Linie 400 und der Linie 410 bei der gegebenen aktuellen Motordrehzahl nmot ergibt. So ist im Falle des Pfeiles 420 bei einer Motordrehzahl nmot von etwa 950 Umdrehungen pro Minute das Maximum der Linie 400 und der Linie 410 auf der Linie 400 zu finden, so dass mit dem bei dieser Motordrehzahl nmot vorliegenden inneren Motormoment mi auf der Linie 400 gefahren wird, während im Falle des Pfeiles 425 bei einer Motordrehzahl nmot von etwa 1200 das Maximum auf der Linie 410 liegt, so dass in diesem Fall mit dem inneren Motormoment mi gemäß der Linie 410 gefahren wird. Den Zündwinkel wird man vorzugsweise so einstellen, dass sich der optimale Zündwinkelwirkungsgrad ergibt, abgesehen von ggf. notwendigen Momentenreserven. Damit wird zwar eine höhere Verzögerung des Fahrzeugs eingestellt, als im oben beschriebenen Fall des mit hoher Wahrscheinlichkeit vorliegenden Rollwunsches, aber eine geringere Verzögerung als im nachstehend beschriebenen Fall. Durch die Einstellung des optimalen Zündwinkels wird auf jeden Fall kein Kraftstoffvergeudet.

Kann man dagegen mit hoher Sicherheit auf einen Verzögerungswunsch des Fahrers schließen, z. B. bei getretener Bremse, so wird gemäß dem Pfeil 430 im Beispiel der Motordrehzahl nmot von ungefähr 1200 Umdrehungen pro Minute ein im Vergleich zum vorherigen Fall nochmals niedrigeres inneres Moment bzw. inneres Motormoment mi eingestellt, gemäß dem Maximum aus der Linie 415 und der Linie 400. Das Maximum liegt dabei in diesem Fall auf der Linie 415 und entspricht bei der für diese Motordrehzahl vorgegebenen Mindestluflmenge dem spätest möglichen Wert für den Zündwinkel.

Eine tatsächliche Schubabschaltung durch Unterbrechung der Kraftstoffzufuhr zu sämtlichen Zylindern des Verbrennungsmotors 1 ist für die zwei exemplarisch betrachteten Motordrehzahlen nmot in Figur 7 anhand der Pfeile 435, 440 dargestellt, gemäß denen das innere Motormoment mi dann auf Null zurückgefahren wird. Dabei kann diese Schubabschaltung auch durch sukzessive Abschaltung der Kraftstoffzufuhr in sogenannten Reduzierstufen zu den einzelnen Zylindern des Verbrennungsmotors 1 erfolgen.

Die Bedingung für eine solche Schubabschaltung wird später erläutert werden.

Figur 6 zeigt nun einen Ablaufplan für einen beispielhaften Ablauf des erfindungsgemäßen Verfahrens, bei dem wie beschrieben zwei Fahrstrategien, nämlich Verzögerung des Fahrzeugs und Rollen des Fahrzeugs in den Vorgabemitteln 190 vorgegeben sind. Nach dem Start des Programms wird ein Wahrscheinlichkeitswert W auf Null gesetzt. Der Wahrscheinlichkeitswert W gibt an, mit welcher Wahrscheinlichkeit die erste Fahrstrategie ausgewählt werden soll, d. h. mit welcher Wahrscheinlichkeit eine Fahrsituation vorliegt, gemäß der der Fahrer des Fahrzeugs das Fahrzeug verzögern will. Die Wahrscheinlichkeit für die zweite Fahrstrategie, nach der das Fahrzeug mit möglichst geringer Bremswirkung rollen soll, kann dann durch Subtraktion dieses Wahrscheinlichkeitswertes W vom Wert 1 ermittelt werden. Bei einem Programmpunkt 200 prüft die Motorsteuerung 25 anhand der Signale des Fahrpedalmoduls 10, ob der Schubbetrieb eingestellt werden soll. Ist dies der Fall, so wird zu einem Programmpunkt 210 verzweigt, an dernfalls wird zu einem Programmpunkt 205 verzweigt Dabei kann die Motorsteuerung 25 am Loslassen des Fahrpedals erkennen, dass der Schubbetrieb eingestellt werden soll.

Bei Programmpunkt 210 prüfen die Wahrscheinlichkeitsermittlungsmittel 197 anhand des Signals des Bremspedalmoduls 20, ob seit dem Loslassen des Fahrpedals das Bremspedal betätigt wurde. Ist dies der Fall, so wird zu einem Programmpunkt 215 verzweigt, andernfalls wird zu einem Programmpunkt 220 verzweigt.

Bei Programmpunkt 215 addieren die Wahrscheinlichkeitsermittlungsmittel 197 zum Wahrscheinlichkeitswert W einen ersten Wert X1, um einen neuen Wahrscheinlichkeitswert W zu bilden. Anschließend wird zu Programmpunkt 220 verzweigt. Bei Programmpunkt 220 prüfen die Wahrscheinlichkeitsermittlungsmittel 197, ob der Gradient einer von einer Betätigung des Fahrpedals beim Loslassen des Fahrpedals abgeleitete Größe einen vorgegebenen Schwellwert unterschreitet. Ist dies der Fall, so wird zu einem Programmpunkt 225 verzweigt, andernfalls wird zu einem Programmpunkt 230 verzweigt. Die von der Betätigung des Fahrpedals abgeleitete Größe kann beispielsweise der Betätigungsgrad des Fahrpedals sein. Er wird den Wahrscheinlichkeitsermittlungsmittel 197 vom Fahrpedalmodul 10 mitgeteilt. Der vorgegebene Schwellwert für den Gradienten ist vorzugsweise ein negativer Wert, weil beim Loslassen des Fahrpedals der Gradient der Betätigung des Fahrpedals auf jeden Fall negativ ist. Dieser vorgegebene Schwellwert kann dabei beispielsweise auf einem Prüfstand so geeignet gewählt werden, dass eine sinnvolle und zuverlässige Unterscheidung zwischen Verzögerungswunsch und Rollwunsch des Fahrers möglich ist.

Bei Programmpunkt 225 addieren die Wahrscheinlichkeitsermittlungsmittel 197 zum aktuell vorliegenden Wahrscheinlichkeitswert W einen zweiten Wert X2 um einen neuen Wahrscheinlichkeitswert W zu bilden. Anschließend wird zu Programmpunkt 230 verzweigt.

Bei Programmpunkt 230 prüfen die Wahrscheinlichkeitsermittlungsmittel 197 anhand des Signals des Drehzahlsensors 60 und des Signals des Geschwindigkeüssensors 65, ob das Verhältnis der Motordrehzahl zur Fahrzeuggeschwindigkeit nmot/v aktuell einen vorgegebenen Schwellwert überschreitet. Ist dies der Fall, so wird zu einem Programmpunkt 235 verzweigt, andernfalls wird zu einem Programmpunkt 240 verzweigt.

Der vorgegebene Schwellwert wird in diesem Fall ebenfalls beispielsweise auf einem Prüfstand so geeignet gewählt, dass ebenfalls eine Unterscheidung zwischen dem Verzögerungswunsch und dem Rollwunsch des Fahrers zuverlässig ermöglicht wird. Je größer die Motordrehzahl im Verhältnis der Fahrzeuggeschwindigkeit ist, um so eher lässt sich um einen Verzögerungswunsch des Fahrers schließen. Je niedriger die Motordrehzahl im Verhältnis der Fahrzeuggeschwindigkeit, umso eher lässt sich auf einen Rollwunsch des Fahrers schließen.

Bei Programmpunkt 235 addieren die Wahrscheinlichkeitsermittlungsmittel 197 zum aktuellen Wert W für die Wahrscheinlichkeit einen dritten Wert X3, um einen neuen Wert W für die Wahrscheinlichkeit zu bilden. Anschließend wird zu Programmpunkt 240 verzweigt.

Bei Programmpunkt 240 prüfen die Wahrscheinlichkeitsermittlungsmittel 197, ob innerhalb einer vorgegebenen Zeit vor dem Loslassen des Fahrpedals von der Getriebesteuerung 175 eine Getrieberückschaltung mitgeteilt wurde. Ist dies der Fall, so wird zu einem Programmpunkt 245 verzweigt, andernfalls wird zu einem Programmpunkt 250 verzweigt. Die vorgegebene Zeit kann dabei beispielsweise derart geeignet gewählt werden, dass eine innerhalb dieser vorgegebenen Zeit durchgeführte Getrieberäckschaltung zuverlässig im Sinne eines Verzögerungswunsches des Fahrers für den nachfolgenden Schubbetrieb erkannt werden kann. Liegt die Getrieberückschaltung länger als die vorgegebene Zeit zurück, so kann ein Zusammenhang zwischen der Getrieberückschaltung und dem nachfolgenden Schubbetrieb nicht mehr hergestellt werden.

Bei Programmpunkt 245 addieren die Wahrscheinlichkeitsermitdungsmittel 197 zum derzeit aktuellen Wahrscheinlichkeitswert W einen vierten Wert X4 hinzu, um einen neuen Wahrscheinlichkeitswert W zu bilden. Anschließend wird zu Programmpunkt 250 verzweigt.

Bei Programmpunkt 250 prüfen die Wahrscheinlichkeitsermittlungsmittel 197, ob aktuell bei der Verwendung eines Automatikgetriebes die Position des Wählhebels oder eines diesem entsprechenden Bedienelementes in einer anderen Stellung als "Drive" bzw. "D" steht. Ist dies der Fall, so wird zu einem Programmpunkt 255 verzweigt, andernfalls wird zu einem Programmpunkt 260 verzweigt. Liegt der Wählhebel in einer anderen Stellung als "Drive" bzw. "D", so kann von einem Verzögerungswunsch des Fahrers ausgegangen werden. Bei Programmpunkt 255 addieren die Wahrscheinlichkeitsermittlungsmittel 197 zum aktuellen Wert W für die Wahrscheinlichkeit einen fünften Wert X5 hinzu, um einen neuen Wert W für die Wahrscheinlichkeit zu bilden. Anschließend wird zu Programmpunkt 260 verzweigt.

Bei Programmpunkt 260 prüfen die Wahrscheinlichkeitsermittlungsmittel 197 anhand des Signals des Neigungssensors 70, ob die Neigung des Fahrzeugs gegenüber der horizontalen betragsmäßig einen vorgegebenen Schwellwert aktuell überschreitet. Ist dies der Fall, so wird zu einem Programmpunkt 265 verzweigt, andernfalls wird zu einem Programmpunkt 270 verzweigt. Der vorgegebene Schwellwert kann dabei so vorgegeben werden, dass ein Verzögerungswunsch des Fahrers von einem Rollwunsch zuverlässig unterschieden werden kann. Ist dabei die Neigung des Fahrzeugs betragsmäßig größer als der vorgegebene Schwellwert so kann aufgrund des vorliegenden Gefälles von einem Verzögerungswunsch ausgegangen werden. Ist die Neigung hingegen betragsmäßig kleiner als der vorgegebene Schwellwert, so wird angenommen, dass der Fahrer im Schubbetrieb rollen will.

Bei Programmpunkt 265 addieren die Wahrscheinlichkeitsermittlungsmittel 197 zum aktuellen Wert W für die Wahrscheinlichkeit einen sechsten Wert X6, um einen neuen Wert W für die Wahrscheinlichkeit zu bilden. Anschließend wird zu Programmpunkt 270 verzweigt.

Bei Programmpunkt 270 prüfen die Wahrscheinlichkeitsermittlungsmittel 197 anhand der Signale der adaptiven Fahrgeschwindigkeitsregelung 165 und dort insbesondere eines Abstandssensors, ob der Abstand zum vorausfahrenden Fahrzeug einen vorgegebenen Schwellwert aktuell unterschreitet. Ist dies der Fall, so wird zu einem Programmpunkt 275 verzweigt, andernfalls wird zu einem Programmpunkt 280 verzweigt. Der vorgegebene Schwellwert kann dabei so gewählt, dass wiederum zuverlässig zwischen einem Verzögerungswunsch und einem Rollwunsch des Fahrers unterschieden werden kann. Je geringer der Abstand zum vorausfahrenden Fahrzeug ist, desto eher kann man von einem Verzögerungswunsch des Fahrers ausgehen. Liegt also der Abstand zum vorausfahrenden Fahrzeug unterhalb des vorgegebenen Schwellwertes, so wird von einem Verzögerungswunsch, andernfalls von einem Rollwunsch ausgegangen.

Bei Programmpunkt 275 addieren die Wahrscheinlichkeitsermittlungsmittel 197 zum aktuellen Wert W für die Wahrscheinlichkeit einen siebten Wert X7 hinzu, um einen neuen Wert W für die Wahrscheinlichkeit zu erhalten. Anschließend wird zu Programmpunkt 280 verzweigt.

Bei Programmpunkt 280 prüfen die Wahrscheinlichkeitsermittlungsmittel 197 wiederum anhand des Abstandssensors der adaptiven Fahrgeschwindigkeitsregelung 165, ob die zeitliche - Ableitung des Abstandes zum vorausfahrenden Fahrzeug, also die Annäherungsgeschwindigkeit an das vorausfahrende Fahrzeug einen vorgegebenen Schwellwert aktuell überschreitet. Ist dies der Fall, so wird zu einem Programmpunkt 285 verzweigt, andernfalls wird zu einem Programmpunkt 290 verzweigt. Der vorgegebene Schwellwert ist dabei gleich Null oder positiv gewählt, um den Verzögerungswunsch des Fahrers von seinem Rollwunsch zu unterscheiden. Bei negativer Annäherungsgeschwindigkeit bzw. einer Annäherungsgeschwindigkeit unterhalb des vorgegebenen Schwellwertes wird davon ausgegangen, dass der Fahrer rollen will, andernfalls wird von einem Verzögerungswunsch des Fahrers ausgegangen.

Bei Programmpunkt 285 addieren die Wahrscheinlichkeitsermittlungsmittel 197 zum aktuellen Wert W für die Wahrscheinlichkeit einen achten Wert X8, um einen neuen Wert W für die Wahrscheinlichkeit zu erhalten. Anschließend wird zu Programmpunkt 290 verzweigt.

Bei Programmpunkt 290 prüfen die Wahrscheinlicbkeitsermitftungsmittel 197 beispielsweise anhand des Signals der Bildverarbeitungseinheit 170, ob von einer Kamera ein Hindernis auf der Fahrbahn aktuell erkannt wird. Ist dies der Fall, so wird zu einem Programmpunkt 295 verzweigt, andernfalls wird zu einem Programmpunkt 300 verzweigt. Bei Erkennung des Hindernisses wird von einem Verzögerungswunsch des Fahrers ausgegangen, andererseits von einem Rollwunsch. Die Bildverarbeitungseinheit 170 umfasst dabei beispielsweise eine Kamera, die den Sichtbereich des Fahrers aufnimmt und an eine Verarbeitungseinheit zur Detektion von Hindernissen weiterleitet. Detektiert die Bildverarbeitungseinheit 170 anhand des Kamerasignals ein Hindernis auf der Fahrbahn, also wird dies durch ein entsprechendes Signal den Wahrscheinlichkeitsermittlungsmitteln 197 mitgeteilt.

Bei Programmpunkt 295 addieren die Wahrscheinlichkeitsermittlungsmittel 197 zum aktuellen Wert W für die Wahrscheinlichkeit einen Wert X9, um einen neuen Wert W für die Wahrscheinlichkeit zu bilden. Anschließend wird zu Programmpunkt 300 verzweigt

Bei Programmpunkt 300 prüfen die Wahrscheinlichkeitsermittlungsmittel 197 anhand des von der Navigationseinheit 95 zugeführten Signals, ob sich das Fahrzeug aktuell einer Kurve nähert. Ist dies der Fall, so wird zu einem Programmpunkt 305 verzweigt, andernfalls wird zu einem Programmpunkt 310 verzweigt. Die Navigationseinheit 95 ermittelt dabei in dem Fachmann bekannter Weise einen aktuellen Standort des Fahrzeugs und gleicht diesen mit gespeicherten Kartendaten ab, so dass festgestellt werden kann, ob sich das Fahrzeug aktuell einer Kurve nähert. Diese Information wird den Wahrscheinlichkeitsermittlungsmitteln 197 mitgeteilt. Nähert sich das Fahrzeug aktuell einer Kurve, so wird von einem Verzögerungswunsch des Fahrers ausgegangen, andernfalls von einem Rollwunsch.

Bei Programmpunkt 305 addieren die Wahrscheinlichkeitsermittlungsmittel 197 zum aktuellen Wert W für die Wahrscheinlichkeit einen Wert X10, um einen neuen Wert W für die Wahrscheinlichkeit zu bilden. Anschließend wird zu Programmpunkt 310 verzweigt. Die Prüfung bei Programmpunkt 300, ob sich das Fahrzeug aktuell einer Kurve nähert, kann auch ausgehend vom Empfang des Signals von der Bildverarbeitungseinheit 170 durch die Wahrscheinlichkeitsermittlungsmittel 197 erfolgen, da die Bildverarbeitungseinheit 170 in der beschriebenen Weise auch ermitteln kann, ob im Sichtbereich des Fahrers eine Kurve auftaucht.

Bei Programmpunkt 310 prüfen die Wahrscheinlichkeitsermittlungsmittel 197 anhand des Signals der Navigationseinheit 95 bzw. der Bildverarbeitungseinheit 170, ob sich das Fahrzeug aktuell einer Kreuzung oder einer Einmündung nähert. Ist dies der Fall, so wird zu einem Programmpunkt 315 verzweigt, andernfalls wird zu einem Programmpunkt 320 verzweigt. Die Annäherung an die Kreuzung bzw. Einmündung wird dabei von der Navigationseinheit 95 bzw. der Bildverarbeitungseinheit 170 in der bereits hinsichtlich der Kurvenerkennung beschriebenen Weise erkannt.

Nähert sich das Fahrzeug einer Kreuzung oder Einmündung, so lässt dies auf einen Verzögerungswunsch des Fahrers schließen, andernfalls liegt ein Rollwunsch vor.

Bei Programmpunkt 315 addieren die Wahrscheinlichkeitsermittlungsmittel 197 zum aktuellen Wahrscheinlichkeitswert W einen Wert X11 hinzu, um einen neuen Wahrscheinlichkeitswert W zu bilden. Anschließend wird zu Programmpunkt 320 verzweigt.

Bei Programmpunkt 320 prüfen die Auswahlmittel 195, ob der Wahrscheinlichkeitswert W oberhalb eines vorgegebenen Schwellwertes S liegt. Ist dies der Fall, so wird zu einem Programmpunkt 325 verzweigt, andernfalls wird zu einem Programmpunkt 330 verzweigt. Der Schwellwert S ist dabei so gewählt, dass ein Wahrscheinlichkeitswert W oberhalb des Schwellwertes S hinreichend zuverlässig auf einen Verzögerungswunsch hindeutet und ein Wahrscheinlichkeitswert W unterhalb des Schwellwertes S hinreichend zuverlässig auf einen Rollwunsch hindeutet.

So wird bei Programmpunkt 325 an den Auswahlmitteln 195 die erste Fahrstrategie ausgewählt und in der beschriebenen Weise umgesetzt. Anschließend wird das Programm verlassen.

Bei Programmpunkt 330 wählen die Auswahlmittel 195 die zweite Fahrstrategie aus und setzen sie in der beschriebenen Weise um. Anschließend wird das Programm verlassen.

Alternativ und wie am Beispiel nach Figur 7 gezeigt kann es auch vorgesehen sein, mehr als zwei Wahrscheinlichkeitsbereiche wie in Figur 6 durch einen Schwellwert S voneinander zu trennen. Gemäß Figur 7 sind drei Wahrscheinlichkeitsbereiche erforderlich, nämlich ein erster Wahrscheinlichkeitsbereich, in dem bei hohem Wahrscheinlichkeitswert W beispielsweise oberhalb eines ersten Schwellwertes S1 von einem Rollwunsch des Fahrers ausgegangen wird und bei dem für Wahrscheinlichkeitswerte W unterhalb eines zweiten Schwellwertes S2, der kleiner als der erste Schwellwert S1 ist, von einem Verzögerungswunsch des Fahrzeugs ausgegangen wird. Liegt der Wahrscheinlichkeitswert W zwischen dem ersten Schwellwert S1 und dem zweiten Schwellwert S2, dann wird gemäß den Pfeilen 420, 425 eine Fahrsituation erkannt, die zwischen einem ausdrücklichen Rollwunsch und einem ausdrücklichen Verzögerungswunsch des Fahrers liegt und beispielsweise gemäß dem Pfeil 425 zur Einstellung eines inneren Motormoments mi führt, dass bei der aktuellen Motordrehzahl nmot unterhalb der Linie 405 und oberhalb der Linie 415 nämlich auf der Linie 410 liegt. Auch können mehr als drei Wahrscheinlichkeitsbereiche und diesen Wahrscheinlichkeitsbereichen zugeordnete Fahrsituationen mit entsprechender Auswirkung auf die Einstellung des inneren Motormomentes mi und damit der beschriebenen Stellgrößen vorgesehen sein.

Beim Ausführungsbeispiel nach Figur 6 ist es vorgesehen, dass die Summe X1 + X2 + X3 + ... + X11 den Wert 1 ergibt. Dabei können die einzelnen Werte X1, X2, X3, ..., X11 durchaus unterschiedlich groß sein, je nachdem wie start das Vorliegen des einen oder anderen Kriteriums für einen Verzögerungs- oder Rollwunsch des Fahrers spricht. So kann beispielsweise vorgesehen sein, den Wert X1 der Betätigung des Bremspedals als größten der Werte X1, X2, X3, ..., X11 auszubilden, beispielsweise auf 0,5 oder 0,55, da die Betätigung des Bremspedals einen Verzogerungswunsch des Fahrers am deutlichsten unterstreicht. Der Schwellwert S kann beispielsweise gleich 0,5 gewählt werden.

Als zusätzliches Kriterium für die Bestimmung der aktuellen Fahrsituation nach dem Loslassen des Fahrpedals kann analog zum Gradienten der von der Betätigung des Fahrpedals abgeleiteten Größe auch der Gradient einer von einer Vorgabe für die Ausgangsgröße der Antriebseinheit 180, im vorliegenden Beispiel das innere Motormoment mi abgeleiteten Größe verwendet werden. So können Fahrzeugfunktionen vorgesehen sein, die in Figur 1 der Übersichtlichkeit halber nicht dargestellt sind und eine solche Vorgabe für das innere Moment mi des Verbrennungsmotors 1 an die Motorsteuerung 25 zur Umsetzung abgeben. Bei dieses Fahrzeugfunktionen kann es sich beispielsweise um ein Antiblockiersystem, eine Antriebsschlupfregelung, eine Fahrdynamikregelung oder dergleichen handeln. Wenn beispielsweise von der Fahrdynamikregelung eine schnelle Rücknahme des inneren Motormoments mi gefordert wird, so kann dies ebenfalls als Verzögerungswunsch interpretiert werden. Somit kann im Ablaufplan nach Figur 6 zusätzlich eine Abfrage der Gestalt vorgesehen sein, ob der von einer solchen Fahrzeugfunktion geforderte Gradient der von einer Vorgabe für das innere Motormoment mi abgeleiteten Größe, vorzugsweise ob der Gradient der Vorgabe für das innere Motormoment mi selbst, einen vorgegebenen Schwellwert unterschreitet. In diesem Fall wird der Verzögerungswunsch erkannt und andernfalls der Rollwunsch. Der vorgegebene Schwellwert ist dabei wie auch im Fall des Gradienten der Fahrpedalbetätigung negativ und so geeignet gewählt, dass der Verzögerungswunsch auch zuverlässig vom Rollwunsch unterschieden werden kann. Die Vorgabe für das in nere Motormoment mi muss nicht unbedingt von einer Fahrzeugfunktion herrühren, sondern kann auch vom Fahrpedalmodul selbst in Form eines vom Betätigungsgrad des Fahrpedals abgeleiteten Fahrerwunschmoment stammen. Der vorgegebene Schwellwert für den Gradienten der von der Vorgabe für die Ausgangsgröße der Antriebseinheit 180 abgeleiteten Größe kann ebenfalls beispielsweise auf einem Prüfstand geeignet appliziert werden.

Dem entsprechenden Kriterium ist dabei wiederum ein Wert X12 für die Bildung des Wahrscheinlichkeitswertes W zugeordnet.

Zusätzlich kann als Kriterium für die aktuell vorliegende Fahrsituation nach Loslassen des Fahrpedals geprüft werden, ob der Quotient aus der aktuellen Getriebeübersetzung ü und der aktuellen Fahrzeuggeschwindigkeit v, d. h. ü/v, einen vorgegebenen Schwellwert unterschreitet. In diesem Fall wird angenommen, dass ein Verzögerungswunsch vorliegt, andernfalls wird ein Rollwunsch angenommen. Der vorgegebene Schwellwert sollte dabei vorzugsweise so gewählt werden, dass eine zuverlässige Unterscheidung zwischen Verzögerungswunsch und Rollwunsch möglich ist. Der vorgegebene Schwellwert kann dabei beispielsweise auf einem Prüfstand entsprechend geeignet appliziert werden.

Je niedriger die Getriebeübersetzung ü im Verhältnis zur Fahrzeuggeschwindigkeit v ist, desto eher wird dabei ein Verzögerungswunsch des Fahrers erkannt und je höher die Getriebeübersetzung ü im Verhältnis zur Fahrzeuggeschwindigkeit v ist, umso eher wird von einem Rollwunsch des Fahrers ausgegangen. Auch diesem Kriterium kann ein entsprechender Wert X13 für die Wahrscheinlichkeit W zugeordnet werden.

Die Getriebeübersetzung ü wird der Motorsteuerung 25 und damit den Wahrscheinlichkeitsermittlungsmitteln 197 über die Getriebesteuerung 175 und die Fahrzeuggeschwindigkeit v über den Geschwindigkeitssensor 65 mitgeteilt.

Bei Verwendung aller genannten Kriterien ergibt somit die Summe aus X1 +X2 +X3, ..., X13 den Wert 1.

Mittels der genannten Stellgrößen Luftzufuhr, Kraftstoffzufuhr und Zündwinkel wird von den Einstellmitteln 185 das innere Motormoment mi als Ausgangsgröße der Antriebseinheit 180 entsprechend der festgelegten Fahrstrategie beispielsweise gemäß der in Figur 7 skizzierten Vorgehensweise eingestellt.

Zusätzlich oder alternativ zu den genanten Stellgrößen kann der Verzögerungswunsch oder der Rollwunsch des Fahrers auch durch Einstellung einer geeigneten Getriebeübersetzung ü seitens der Getriebesteuerung 175 unterstützt werden.

Dabei kann im Falle eines Verzögerungswunsches zurückgeschaltet, d. h. die Getriebeübersetzung ü verringert und im Falle eines Rollwunsches die Getriebeübersetzung ü erhöht, d. h. hochgeschaltet werden.

Ganz allgemein können zur Einstellung der Ausgangsgröße der Antriebseinheit 180 gemäß der ausgewählten Fahrstrategie eine oder mehrere der Stellgrößen Luftzufuhr, Kraftstoffzufuhr, Zündwinkel und Getriebeübersetzung gewählt werden. Da die Getriebeübersetzung sich auf das innere Motormoment mi nicht auswirkt, sind im Falle der Verwendung der Getriebeübersetzung ü als Stellgröße die vorstehend insbesondere zu Figur 7 gemachten Betrachtungen beispielsweise für die Ausgangsgröße des Raddrehmomentes der Antriebseinheit 180 analog anzusetzen.

Weiterhin kann es vorgesehen sein, dass unabhängig von der gewählten Fahrstrategie bei Detektion eines Fehlers an einer sicherheitsrelevanten Komponente des Fahrzeugs oder der Antriebseinheit 180 wie beispielsweise dem Bremssystems die Luftzufuhr verringert und/oder der Zündwinkel in Richtung Spät verschoben und/oder die Kraftstoffzufuhr verringert und/oder die Getriebeübersetzung verringert wird. Auf diese Weise lässt sich das Fahrzeug sicherheitshalber verzögern und ggf. anhalten.

Weiterhin kann es vorgesehen sein, auch einen Schwellwert für eine Betriebsgröße der Antriebseinheit 180, oberhalb dem die Kraftstoffzufuhr vollständig unterbrochen wird, also komplette Schubabschaltung realisiert wird, abhängig von der aktuellen Fahrsituation vorzugeben. Bei dieser Betriebsgröße der Antriebseinheit 180 kann es sich vorzugsweise um die Motordrehzahl nmot handeln. So kann bei Vorliegen der ersten Fahrsituation, die zur Auswahl der ersten Fahrstrategie führt, also bei Vorliegen des Verzögerungswunsches ein erster vorgegebener Schwellwert für die Motordrehzahl bei einem niedrigeren Wert gewählt werden, als dies bei Vorliegen der zweiten Fahrsituation, also des Rollwunsches der Fall ist, die zur Auswahl der zweiten Fahrstrategie führt. Somit erfolgt die vollständige Schubabschaltung im Falle des Verzögerungswunsches schon bei geringeren Motordrehzahlen als bei Vorliegen des Rollwunsches.

Entsprechend kann es vorgesehen sein, dass ein zweiter vorgegebener Schwellwert für die Betriebsgröße der Antriebseinheit für das Wiedereinsetzen der Kraftstoffzufuhr nach der kompletten Schubabschaltung abhängig von der aktuellen Fahrsituation nach Loslassen des Fahrpedals gewählt wird. Als Betriebsgröße kann hier wiederum vorzugsweise die Motordrehzahl verwendet werden. So kann es beispielsweise vorgesehen sein, dass bei Vorliegen der ersten Fahrsituation, also des Verzögerungswunsches der zweite vorgegebene Schwellwert für die Motordrehzahl, unterhalb der die Kraftstoffzufuhr nach vorheriger Unterbrechung wieder aufgenommen wird, bei einem niedrigeren Wert liegt, als dies bei Vorliegen der zweiten Fahrsituation, also des Rollwunsches der Fall ist. Somit wird im Falle des Vorliegens des Verzögerungswunsches nach dem Loslassen des Fahrpedals die Kraftstoffzufuhr erst bei Absinken der Motordrehzahl auf einen niedrigeren Wert wieder aufgenommen, als dies bei Vorliegen des Rollwunsches, also der zweiten Fahrsituation der Fall ist.

Der erste vorgegebene Schwellwert für die Motordrehzahl und der zweite vorgegebene Schwellwert für die Motordrehzahl können dabei beispielsweise auf einen Prüfstand geeignet appliziert werden, damit die vollständige Schubabschaltung durch Unterbrechung der Kraftstoffzufuhr und die Wiederaufnahme der Kraftstoffzufuhr nach vorheriger Unterbrechung optimal auf die aktuell vorliegende Fahrsituation abgestimmt sind, d. h. die aktuelle Fahrsituation und damit die ausgewählte Fahrstrategie optimal unterstützen. Dies wird im Falle des Vorliegens eines Verzögerungswunsches dadurch erreicht, dass die vollständige Unterbrechung der Kraftstoffzufuhr schon bei niedrigeren Motordrehzahlen erfolgt als bei Vorliegen des Rollwunsches und dass die Wiederaufnahme der Kraftstoffzufuhr nach vorheriger Unterbrechung bei Vorliegen des Verzögerungswunsches bei abnehmender Motordrehzahl erst bei einer niedrigeren Motordrehzahl wieder einsetzt, als dies bei Vorliegen des Rollwunsches der Fall ist.

Im Folgenden wird das erfindungsgemäße Verfahren und die erfindungsgemäße Vorrichtung beispielhaft für den Fall erläutert, dass als alleinige Stellgröße die Luftzufuhr zur Umsetzung einer fahrsituationsabhängigen Fahrstrategie nach Loslassen des Fahrpedals verwendet wird.

Allgemein handelt es sich bei der im folgenden dargestellten konkreten Ausfiihrungsform um ein Verfahren zum Betreiben eines Fahrzeugs mit dem Verbrennungsmotor 1, bei dem die Luftzufuhr zum Verbrennungsmotor 1 über das Stellglied 5, also in diesem Beispiel die Drosselklappe, eingestellt wird und im Schubbetrieb des Verbrennungsmotors 1 der Öffnungsgrad des Stellgliedes 5 abhängig von einer Fahrsituation eingestellt wird. Dabei kann es wie beschrieben vorgesehen sein, dass die Fahrsituation durch Auswertung des Gradienten einer von einer Betätigung des Fahrpedals abgeleiteten Größe ermittelt wird. In diesem Fall kann bei Unterschreiten eines vorgegebenen Schwellwertes durch den Gradienten der Öffnungsgrad des Stellgliedes 5 in Richtung der Schließstellung des Stellgliedes 5 verringert werden und bei einem Gradienten oberhalb des vorgegebenen Schwellwertes der Öffnungsgrad des Stellgliedes 5 in Richtung der vollständigen Öffnung des Stellgliedes 5 erhöht werden. Alternativ kann es vorgesehen sein, dass der im Schubbetrieb einzustellende Öffnungsgrad des Stellgliedes 5 bzw. eine diesen Öffnungsgrad charakterisierende Größe abhängig vom Gradienten der von der Betätigung des Fahrpedals abgeleiteten Größe mittels einer Kennlinie oder eines Kennfeldes 15 ermittelt wird.

Zusätzlich oder alternativ kann die Fahrsituation durch Auswertung der Betätigung des Bremspedals ermittelt werden. Dabei kann es vorgesehen sein, dass bei gedrücktem Bremspedal der Öffnungsgrad des Stellgliedes 5 in Richtung der Schließstellung des Stellgliedes 5 verringert wird und dass bei losgelassenem Bremspedal der Öffnungsgrad des Stellgliedes 5 in Richtung der vollständigen Öffnung des Stellgliedes 5 erhöht wird.

Zusätzlich oder alternativ kann es vorgesehen sein, dass die Fahrsituation durch Auswertung der Information über die Neigung des Fahrzeuges gegenüber der Horizontalen ermittelt wird. In diesem Fall kann es vorgesehen sein, dass bei betragsmäßigem Überschreiten eines vorgegebenen Schwellwertes durch die Neigung der Öffnungsgrad des Stellgliedes 5 in Richtung der Schließstellung des Stellgliedes 5 verringert wird und dass bei betragsmäßigem Unterschreiten des vorgegebenen Schwellwertes durch die Neigung der Öffnungsgrad des Stellgliedes 5 in Richtung der vollständigen Öffnung des Stellgliedes 5 erhöht wird.

Zusätzlich oder alternativ kann es vorgesehen sein, dass die Fahrsituation durch Auswertung der Fahrgeschwindigkeit ermittelt wird.

Weiterhin kann es optional vorgesehen sein, dass bei Detektion eines Fehlers an einer sicherheitsrelevanten Komponente des Fahrzeugs oder des Verbrennungsmotors 1 der Öffnungsgrad des Stellgliedes 5 in Richtung der Schließstellung des Stellgliedes 5 verringert wird.

Erfindungsgemäß ist dabei die Motorsteuerung 25 zum Betreiben des Fahrzeugs mit dem Verbrennungsmotor 1 vorgesehen, mit dem Stellglied 5 zur Einstellung der Luftzufuhr zum Verbrennungsmotor 1, wobei die Steuereinheit 30 vorgesehen ist, die im Schubbetrieb des Verbrennungsmotors 1 einen Öffnungsgrad des Stellgliedes 5 abhängig von der Fahrsituation einstellt.

In Abhängigkeit der erkannten Fahrsituation wird dann die Drosselklappe 5 derart angesteuert, um das gewünschte Motorbremsmoment zu erzeugen. Dadurch kann der Kraftstoffverbrauch reduziert werden. Erfindungsgemäß wird also im Schubbetrieb des Fahrzeugs bzw. des Verbrennungsmotors 1 der Öffnungsgrad der Drosselklappe 5 abhängig von der aktuellen Fahrsituation eingestellt.

Es gibt wie beschrieben verschiedene Möglichkeiten, die aktuelle Fahrsituation zu ermitteln.

Eine Möglichkeit besteht darin, den Gradienten einer von einer Betätigung des Fahrpedals abgeleiteten Größe zu ermitteln. Bei dieser Größe kann es sich z. B. um den Betätigungsgrad des Fahrpedals oder um den Pedalwinkel wped_w handeln. Im Folgenden soll beispielhaft angenommen werden, dass es sich bei der von der Betätigung des Fahrpedals abgeleiteten Größe um den Pedalwinkel wped_w handelt. Wenn also der Schubbetrieb des Fahrzeugs bzw. des Verbrennungsmotors 1 durch ein schnelles Loslassen des Fahrpedals erreicht wurde, dann deutet dies darauf hin, dass im Schubbetrieb ein hohes Motorbremsmoment eingestellt werden soll. Wenn hingegen der Schubbetrieb des Fahrzeugs bzw. des Verbrennungsmotors 1 durch ein langsames Loslassen des Fahrpedals erreicht wurde, dann deutet dies darauf hin, dass im Schubbetrieb ein niedriges Motorbremsmoment eingestellt werden soll. Deshalb kann es im einfachsten Fall vorgesehen sein, dass ein Schwellwert Swped_w für den Gradienten des Pedalwinkels wped_w vorgegeben und in der Motorsteuerung 25 abgespeichert wird. Der Schwellwert Swped_w kann dabei beispielsweise auf einem Prüfstand geeignet appliziert werden. Der vorgegebene Schwellwert Swped_w wird dabei als negativer Wert gewählt, da sich beim Loslassen des Fahrpedals auch ein negativer zeitlicher Gradient des Pedalwinkels wped_w einstellen wird. Aus dem vom Fahrpedalmodul 10 der Motorsteuerung 25 mitgeteilten Pedalwinkel wped_w des Fahrpedals ermittelt die Motorsteuerung 25 den zeitlichen Gradienten dieses Pedalwinkels wped_w. Unterschreitet dieser Gradient beim Loslassen des Fahrpedals den vorgegebenen Schwellwert Swped_w, dann liegt ein schnelles Loslassen des Fahrpedals vor und es ist ein hohes Motorbremsmoment gewünscht. In diesem Fall wird die Motorsteuerung 25 die Drosselklappe 5 derart ansteuern, dass der Öffnungsgrad der Drosselklappe 5 in Richtung der Schließstellung der Drosselklappe 5 verringert wird. Dies kann bspw. dadurch geschehen, dass die Drosselklappe 5 vollständig geschlossen wird. Auf diese Weise wird ein maximales Motorbremsmoment erzeugt. Überschreitet der Gradient beim Loslassen des Fahrpedals den vorgegebenen Schwellwert Swped_w, dann liegt ein langsames Loslassen des Fahrpedals vor und es ist ein niedriges Motorbremsmoment gewünscht. In diesem Fall wird die Motorsteuerung 25 die Drosselklappe 5 derart ansteuern, dass der Öffnungsgrad der Drosselklappe 5 in Richtung der vollständigen Öffnung der Drosselklappe 5 erhöht wird. Dies kann bspw. dadurch geschehen, dass die Drosselklappe 5 vollständig geöffnet wird. Auf diese Weise wird ein minimales Motorbremsmoment erzeugt. Bei der Wahl des vorgegebenen Schwellwertes Swped_w ist also darauf zu achten, dass Gradienten des Pedalwinkels wped_w oberhalb dieses Schwellwertes Swped_w auch nur mit einem Fahrerwunsch eines minimalen Motorbremsmomentes korrelieren und das Gradienten des Pedalwinkels wped_w unterhalb dieses Schwellwertes Swped_w auch nur mit einem Fahrerwunsch eines maximalen Motorbremsmomentes korrelieren.

Gemäß einer alternativen Ausführungsform ist eine differenziertere Einstellung des Öffnungsgrades der Drosselklappe 5 in Abhängigkeit der Fahrsituation im Schubbetrieb möglich. Dabei wird der einzustellende Öffnungsgrad der Drosselklappe 5 bzw. eine diesen Öffnungsgrad charakterisierende Größe abhängig vom Gradienten der von der Betätigung des Fahrpedals abgeleiteten Größe, in diesem Beispiel des Pedalwinkels wped_w, mittels einer Kennlinie oder eines Kennfeldes ermittelt. Bei der den Öffnungsgrad der Drosselklappe 5 charakterisierenden Größe kann es sich beispielsweise um einen Sollwert wped_wsoll für den Pedalwinkel handeln, der proportional zu einem Öffnungsgrad der Drosselklappe 5 ist, mit dem der Sollwert wped_wsoll des Pedalwinkels zur Realisierung eines entsprechenden Fahrerwunschmomentes umgesetzt werden kann. Der Vorteil bei der Kennlinienlösung besteht darin, dass für jeden Gradienten des Pedalwinkels wped_w ein zugeordneter Öffnungsgrad der Drosselklappe 5 bzw. in diesem Beispiel ein zugeordneter Sollwert wped_wsoll des Pedalwinkels aus der Kennlinie entnommen werden kann, sodass der Öffnungsgrad der Drosselklappe 5 differenzierter in Abhängigkeit des Gradienten des Pedalwinkels wped_weingestellt werden kann. Es kann natürlich auch vorgesehen sein, das als Ausgangsgröße der Kennlinie entweder eine vollständig geschlossene Drosselklappe 5 oder eine vollständig geöffnete Drosselklappe 5 resultiert, sodass sich im Ergebnis das Gleiche ergibt wie bei der oben beschriebenen Schwellwertlösung. Die Verwendung eines Kennfeldes ist dann erforderlich, wenn zusätzlich zum Gradienten des Pedalwinkels wped_w eine oder mehrere weitere Eingangsgrößen bei der Ermittlung der aktuellen Fahrsituation im Schubbetrieb berücksichtigt werden sollen. Dies kann bspw. die Fahrgeschwindigkeit sein. Die Kennlinie bzw. das Kennfeld können beispielsweise auf einem Prüfstand geeignet appliziert werden, um dem jeweiligen zeitlichen Gradienten des Pedalwinkels wped_w jeweils einen geeigneten Sollwert wped_wsoll für den Pedalwinkel und damit einen geeigneten Öffnungsgrad der Drosselklappe 5 zur Einstellung des gewünschten Motorbremsmomentes im Schubbetrieb zuzuordnen.

In Figur 2 ist ein Funktionsdiagramm dargestellt, das die Einstellung des Öffnungsgrades der Drosselklappe 5 in Abhängigkeit der Fahrsituation im Schubbetrieb zeigt, wobei hier der Sollwert wped_wsoll für den Pedalwinkel als charakteristische Größe für den Öffnungsgrad der Drosselklappe 5 kennfeldgesteuert in Abhängigkeit des Gradienten des Pedalwinkels wped_w und der Fahrgeschwindigkeit vorgegeben wird. In Figur 2 kennzeichnet dabei 30 eine Steuereinheit, die bspw. software- und/oder hardwaremäßig in der Motorsteuerung 25 implementiert sein kann. Einem gesteuerten Schalter 90 der Steuereinheit 30 wird einerseits ein Sollwert FWwped_wsoll für den Pedalwinkel entsprechend einem Fahrerwunsch oder einer Anforderung einer Fahrzeugfunktion, wie beispielsweise einem Antiblockiersystem, einer Antriebschlupfragelung, einer Fahrdynamikregelung oder dergleichen zugeführt und andererseits die Ausgangsgröße wped_wsoll eines Kennfeldes 15, die ebenfalls einen Sollwert für den Pedalwinkel darstellt. Der gesteuerte Schalter 90 wird von einem Ausgangssignal eines UND-Gliedes 75 angesteuert. Ist dieses Ausgangssignal des UND-Gliedes 75 gesetzt, so wird der gesteuerte Schalter 90 veranlasst, an seinem Ausgang das Ausgangssignal wped_wsoll des Kennfeldes 15 zur Verfügung zu stellen. Ist dieses Ausgangssignal des UND-Gliedes 75 nicht gesetzt; so wird der gesteuerte Schalter 90 veranlasst, an seinem Ausgang das Signal FWwped_wsoll zur Verfügung zu stellen. Einem ersten Eingang 80 des UND-Gliedes 75 ist ein Schubabschaltsignal BSA zugeführt, das angibt, ob der Verbrennungsmotor 1 bzw. das Fahrzeug sich im Schubbetrieb befindet, der Schubbetrieb also aktiv ist. Dies kann in der Motorsteuerung 25 einfach dadurch festgestellt werden, dass geprüft wird, ob das Fahrpedal 10 losgelassen wurde, also nicht mehr betätigt wird. In diesem Fall liegt Schubbetrieb vor und das Schubabschaltsignal BSA wird von der Motorsteuerung 25 gesetzt. Andernfalls, also bei noch vorliegender Betätigung des Fahrpedals liegt kein Schubbetrieb vor und das Schubabschaltsignal BSA wird von der Motorsteuerung 25 nicht gesetzt bzw. zurückgesetzt Einem zweiten invertierten Eingang 85 des UND-Gliedes 75 ist ein Bremspedalsignal wbrems zugeführt, das von der Motorsteuerung 25 gesetzt wird, wenn das Bremspedal betätigt ist, und das von der Motorsteuerung 25 nicht gesetzt bzw. zurückgesetzt wird, wenn das Bremspedal nicht betätigt ist. Dazu wertet die Motorsteuerung 25 den vom Bremspedalmodul 20 gelieferten Betätigungsgrad des Bremspedals entsprechend aus. Auf diese Weise ist das Ausgangssignal des UND-Gliedes 75 nur gesetzt, wenn Schubbetrieb vorliegt und das Bremspedal nicht betätigt ist. Andernfalls ist das Ausgangssignal des UND-Gliedes 75 nicht gesetzt. Eingangsgrößen des Kennfeldes 15 sind die Fahrzeuggeschwindigkeit v, die von dem Geschwindigkeitssensor 65 ermittelt wird, und der von der Motorsteuerung 25 gebildete zeitliche Gradient dwped_w/dt des vom Fahrpedalmodul 10 an die Motorsteuerung 25 gelieferten Pedalwinkels wped_w. Das Kennfeld 15 ordnet dem zeitlichen Gradienten dwped_w/dt des Pedalwinkels und der Fahrgeschwindigkeit v den Sollwert wped_wsoll für den Pedalwinkel zu, der zur dem entsprechenden gewünschten Öffnungsgrad der Drosselklappe 5 führt. Dabei kann es vorgesehen sein, dass mit steigendem zeitlichen Gradienten dwped_w/dt des Pedalwinkels wped_w und gleichbleibender Fahrgeschwindigkeit v der Sollwert wped_wsoll für den Pedalwinkel und damit der Öffnungsgrad der Drosselklappe 5 erhöht wird, um das Motorbremsmoment zu verringern, und dass mit steigender Fahrgeschwindigkeit v und gleichbleibendem zeitlichen Gradienten dwped_w/dt des Pedalwinkels wped_w der Sollwert wped_wsoll für den Pedalwinkel und damit der Öffnungsgrad der Drosselklappe 5 gesenkt wird, um das Motorbremsmoment zu erhöhen und damit die Verkehrssicherheit durch Absenkung der Fahrgeschwindigkeit im Schubbetrieb zu steigern.

Wird die aktuelle Fahrsituation wie beschrieben in Abhängigkeit des zeitlichen Gradienten dwped_w/dt des Pedalwinkels wped_w ermittelt, so handelt es sich bei dem zeitlichen Gradienten dwped w/dt des Pedalwinkels wped_w um demjenigen, der beim Loslassen des Fahrpedals zum Erreichen des Schubbetriebes vorliegt.

Zusätzlich oder alternativ zur Bestimmung der aktuellen Fahrsituation abhängig vom zeitlichen Gradienten dwped_w/dt des Pedalwinkels wped_w kann die aktuelle Fahrsituation auch durch Auswertung einer Betätigung des Bremspedals ermittelt werden. Dabei kann es vorgesehen sein, dass bei gedrücktem Bremspedal der Öffnungsgrad der Drosselklappe 5 in Richtung der Schließstellung der Drosselklappe 5 verringert wird, wobei in diesem Fall die Drosselklappe 5 beispielsweise vollständig geschlossen werden kann, und dass bei losgelassenem Bremspedal der Öffnungsgrad der Drosselklappe 5 in Richtung der vollständigen Öffnung der Drosselklappe 5 erhöht wird, wobei in diesem Fall die Drosselklappe 5 beispielsweise vollständig geöffnet werden kann. Die Betätigung des Bremspedals bzw. dessen Nicht-Betätigung wird von der Motorsteuerung 25 aus dem vom Bremspedalmodul 20 gelieferten Betätigungsgrad des Bremspedals ermittelt. Somit kann eine aktuelle Fahrsituation im Schubbetrieb an Hand des Betätigungsgrades des Bremspedals im Hinblick auf ein gewünschtes hohes Motorbremsmoment er kannt werden, wenn ein betätigtes Bremspedal festgestellt wird. Umgekehrt kann eine aktuelle Fahrsituation im Schubbetrieb an Hand des Betätigungsgrades des Bremspedals im Hinblick auf ein gewünschtes niedriges Motorbremsmoment erkannt werden, wenn ein losgelassenes Bremspedal festgestellt wird.

Auch im Falle der Bestimmung der aktuellen Fahrsituation abhängig vom Betätigungsgrad des Bremspedals kann es vorgesehen sein, verschiedenen Betätigungsgraden des Bremspedals jeweils einen unterschiedlichen Öffnungsgrad der Drosselklappe 5 zuzuordnen, wobei die Zuordnung über eine Kennlinie erfolgen kann. Auf diese Weise lässt sich wiederum eine differenziertere Einstellung des Öffnungsgrades der Drosselklappe 5 in Abhängigkeit des Betätigungsgrades des Bremspedals erreichen. Wird die aktuelle Fahrsituation zusätzlich von anderen Größen mitbestimmt, wie z. B. der Fahrgeschwindigkeit v und/oder dem zeitlichen Gradienten dwped_w/dt des Pedalwinkels wped_w, so können alle diese Größen, die die aktuelle Fahrsituation kennzeichnen, als Eingangsgrößen in ein Kennfeld eingehen, dessen Ausgangsgröße der Öffnungsgrad der Drosselklappe 5 bzw. eine den Öffnungsgrad der Drosselklappe 5 charakterisierende Größe, wie z. B. der genannte Sollwert wped_wsoll für den Pedalwinkel wped_w, ist. Die Kennlinie bzw. das Kennfeld können wiederum beispielsweise auf einem Prüfstand geeignet appliziert werden. Ausgehend von dem Kennfeld 15 in Figur 2 kann gemäß dem dortigen Funktionsdiagramm als weitere Eingangsgröße des Kennfeldes 15 der Betätigungsgrad des Bremspedals eingehen, wobei mit zunehmender Betätigung des Bremspedals bei gleichbleibender Fahrgeschwindigkeit v und gleichbleibendem zeitlichen Gradienten dwped_w/dt des Pedalwinkels wped_w der Sollwert wped_wsoll des Pedalwinkels wped _wund damit der Öffnungsgrad der Drosselklappe 5 sinkt. In diesem Fall kann der gesteuerte Schalter 90 auch allein durch das Schubabschallsignal BSA derart gesteuert werden, dass bei gesetztem Schubabschaltsignal BSA der gesteuerte Schalter 90 an seinem Ausgang den Ausgang des Kennfeldes 15 und andernfalls den Sollwert FWwped_wsoll anliegen hat.

Zusätzlich oder alternativ zur Bestimmung der aktuellen Fahrsituation abhängig vom zeitlichen Gradienten dwped_w/dt des Pedalwinkels wped_w und/oder des Betätigungsgrades des Bremspedals und/oder der Fahrgeschwindigkeit v kann die aktuelle Fahrsituation auch durch Auswertung einer Information über eine Neigung des Fahrzeugs gegenüber der Horizontalen ermittelt werden. Zu diesem Zweck wertet die Motorsteuerung 25 das Signal des Neigungssensors 70 aus. Dabei kann in der Motorsteuerung 25 ein Neigungsschwellwert N für die Neigung des Fahrzeugs gegenüber der Horizontalen vorgegeben sein. Es kann dann beispielsweise vorgesehen sein, dass bei betragsmäßigem Überschreiten des vorgegeben Neigungsschwellwerts N durch die Neigung des Fahrzeugs gegenüber der Horizontalen der Öffnungsgrad der Drosselklappe 5 in Richtung der Schließstellung der Drosselklappe 5 verringert wird, wobei in diesem Fall die Drosselklappe 5 beispielsweise vollständig geschlossen werden kann und dass bei betragsmäßigem Unterschreiten des vorgegebenen Neigungsschwellwertes N durch die Neigung des Fahrzeugs gegenüber der Horizontalen der Öffnungsgrad der Drosselklappe 5 in Richtung der vollständigen Öffnung der Drosselklappe 5 erhöht wird, wobei in diesem Fall die Drosselklappe 5 beispielsweise vollständig geöffnet werden kann. Somit kann eine aktuelle Fahrsituation im Schubbetrieb an Hand der Neigung des Fahrzeugs gegenüber der Horizontalen im Hinblick auf ein gewünschtes hohes Motorbremsmoment erkannt werden, wenn eine betragsmäßig große, über dem Neigungsschwellwert N liegende und der Neigung des Fahrzeugs gegenüber der Horizontalen entsprechende Fahrbahnsteigung erkannt wird. In diesem Fall ist aus Gründen der Verkehrsicherheit ein hohes Motorbremsmoment gewünscht. Umgekehrt kann eine aktuelle Fahrsituation im Schubbetrieb an Hand der Neigung des Fahrzeugs gegenüber der Horizontalen im Hinblick auf ein gewünschtes niedriges Motorbremsmoment erkannt werden, wenn eine betragsmäßig kleine, unter dem Neigungsschwellwert N liegende und der Neigung des Fahrzeugs gegenüber der Horizontalen entsprechende Fahrbahnsteigung erkannt wird. In diesem Fall ist aus Gründen der Verkehrsicherheit ein hohes Motorbremsmoment nicht erforderlich und es kann ein niedrigeres Motorbremsmoment eingestellt werden. Der Neigungsschwellwert N kann bspw. auf einem Prüfstand oder in Fahrversuchen geeignet gewählt werden, um die notwendigen Anforderungen an die Verkehrsicherheit zu erfüllen.

Auch im Falle der Bestimmung der aktuellen Fahrsituation abhängig von der Neigung des Fahrzeugs gegenüber der Horizontalen kann es vorgesehen sein, verschiedenen Neigungen des Fahrzeugs gegenüber der Horizontalen jeweils einen unterschiedlichen Öffnungsgrad der Drosselklappe 5 zuzuordnen, wobei die Zuordnung über eine Kennlinie erfolgen kann. Auf diese Weise lässt sich wiederum eine differenziertere Einstellung des Öffnungsgrades der Drosselklappe 5 in Abhängigkeit der Neigung des Fahrzeugs gegenüber der Horizontalen erreichen. Wird die aktuelle Fahrsituation zusätzlich von anderen Größen mitbestimmt, wie z. B. der Fahrgeschwindigkeit v und/oder dem zeitlichen Gradienten dwped_w/dt des Pedalwinkels wped_w und/oder der Betätigung des Bremspedals, so können alle diese Größen, die die aktuelle Fahrsituation kennzeichnen, als Eingangsgrößen in ein Kennfeld eingehen, dessen Ausgangsgröße der Öffnungsgrad der Drosselklappe 5 bzw. eine den Öffnungsgrad der Drosselklappe 5 charakterisierende Größe, wie z. B. der genannte Sollwert wped_wsoll für den Pedalwinkel wped_w, ist. Die Kennlinie bzw. das Kennfeld können wiederum beispielsweise auf einem Prüfstand geeignet appliziert werden. Ausgehend von dem Kennfeld 15 in Figur 2 kann gemäß dem dortigen Funktionsdiagramm als weitere Eingangsgröße des Kennfeldes 15 die Neigung des Fahrzeugs gegenüber der Horizontalen eingehen, wobei mit betragsmäßig zunehmender Neigung des Fahrzeugs gegenüber der Horizontalen bei gleichbleibender Fahrgeschwindigkeit v und gleichbleibendem zeitlichen Gradienten dwped_w/dt des Pedalwinkels wped_w und gleichbleibendem Betätigungsgrad des Bremspedals der Sollwert wped_wsoll des Pedalwinkels wped_w und damit der Öffnungsgrad der Drosselklappe 5 sinkt. In diesem Fall kann der gesteuerte Schalter 90 auch allein durch das Schubabschaltsignal BSA derart gesteuert werden, dass bei gesetztem Schubabschaltsignal BSA der gesteuerte Schalter 90 an seinem Ausgang den Ausgang des Kennfeldes 15 und andernfalls den Sollwert FWwped_wsoll anliegen hat.

Weiterhin kann es optional vorgesehen sein, dass bei Detektion eines Fehlers an einer sicherheitsrelevanten Komponente oder Eigenschaft oder Betriebsgröße des Fahrzeugs oder des Verbrennungsmotors 1 der Öffnungsgrad der Drosselklappe 5 sicherheitshalber in Richtung der Schließstellung der Drosselklappe 5 verringert wird, um das Motorbremsmoment zu erhöhen und des Fahrzeugs schnellstmöglich abzubremsen. Die größte Bremswirkung wird dabei erreicht, wenn die Drosselklappe 5 vollständig geschlossen wird. Als Beispiel für eine sicherheitsrelevante Komponente des Fahrzeugs sei hier das Antiblockiersystem oder der Bremskraftverstärker genannt. Als Beispiel für eine sicherheitsrelevante Betriebsgröße des Verbrennungsmotors 1 sei hier die Motortemperatur oder der Motorölstand genannt. Fallen sicherheitsrelevante _ Komponenten aus oder werden sie in sonstiger Weise von der Motorsteuerung 25 als fehlerhaft detektiert oder liegen sicherheitsrelevante Eigenschaften oder Betriebsgrößen außerhalb ihres zulässigen Bereichs, so wird im Falle des Schubbetriebes unabhängig von der aktuellen Fahrsituation die Drosselklappe 5 in Richtung ihrer Schließstellung bewegt, vorzugsweise vollständig geschlossen, um ein möglichst großes Motorbremsmoment zu erzielen.

In Figur 3 ist ein Ablaufplan für einen beispielhaften Ablauf des erfindungsgemäßen Verfahrens angegeben. Nach dem Start des Programms prüft die Motorsteuerung 25 bei einem Programmpunkt 100, ob Schubbetrieb vorliegt. Ist dies der Fall, so wird zu einem Programmpunkt 105 verzweigt, andernfalls wird zu Programmpunkt 100 zurückverzweigt. Die Prüfung auf Vorliegen des Schubbetriebes kann wie beschrieben dadurch erfolgen, dass die Motorsteuerung 25 den Betätigungsgrad des Fahrpedals ausgewertet. Wird das Fahrpedal losgelassen, so erkennt die Motorsteuerung 25 auf Schubbetrieb und setzt das Schubabschaltsignal BSA, andernfalls erkennt die Motorsteuerung 25 auf Zugbetrieb und setzt das Schubabschaltsignal BSA zurück.

Bei Programmpunkt 105 prüft die Motorsteuerung 25, ob ein Fehler an einer sicherheitsrelevanten Komponente oder Betriebsgröße des Fahrzeugs oder des Verbrennungsmotors 1 vorliegt. Ist dies der Fall, so wird zu einem Programmpunkt 140 verzweigt, andernfalls wird zu einem Programmpunkt 110 verzweigt.

Bei Programmpunkt 110 wertet die Motorsteuerung 25 in der beschriebenen Weise den Betätigungsgrad des Bremspedals aus. Anschließend wird zu einem Programmpunkt 115 verzweigt.

Der Programmpunkt 115 prüft die Motorsteuerung 25, ob das Bremspedal betätigt wurde. Ist dies der Fall, so wird zu Programmpunkt 140 verzweigt, andernfalls wird zu einem Programmpunkt 120 verzweigt.

Bei Programmpunkt 120 wertet die Motorsteuerung 25 die Information des Neigungssensors 70 aus und ermittelt die Neigung des Fahrzeugs gegenüber der Horizontalen und damit die Steigerung der Fahrbahn. Anschließend wird zu einem Programmpunkt 125 verzweigt.

Bei Programmpunkt 125 prüft die Motorsteuerung 25, ob die Neigung des Fahrzeugs gegenüber der Horizontalen betragsmäßig oberhalb des vorgegebenen Neigungsschwellwertes N liegt. Ist dies der Fall, so wird zu Programmpunkt 140 verzweigt, andernfalls wird zu einem Programmpunkt 130 verzweigt.

Bei Programmpunkt 130 ermittelt die Motorsteuerung 25 in der beschriebenen Weise den zeitlichen Gradienten dwped_w/dt des Pedalwinkels wped_w, der beim Loslassen des Fahrpedals zum Erreichen des Schubbetriebes vorlag. Dazu werden die Betätigungsgrade des Fahrpedals von der Motorsteuerung 25 aus dem vom Fahrpedalmodul 10 gelieferten Signal zeitdiskret abgetastet und gespeichert, sodass die Betätigungsgrade des Fahrpedals beim Loslassen des Fahrpedals zum Einstellen des Schubbetriebes in der Motorsteuerung 25 vorliegen und zur Berechnung des zeitlichen Gradienten dwped_w/dt des Pedalwinkels wped_w verwendet werden können. Außerdem ermittelt die Motorsteuerung 25 die aktuelle Fahrgeschwindigkeit v. Anschließend wird zu einem Programmpunkt 135 verzweigt.

Bei Programmpunkt 135 wird von der Motorsteuerung 25 gemäß dem Kennfeld 15 aus dem hier nicht weiter betrachteten Funktionsdiagramm nach Figur 2 abhängig von der Fahrgeschwindigkeit v und dem zeitlichen Gradienten dwped_w/dt des Pedalwinkels wped_w der Sollwert wped_wsoll für den Pedalwinkel und damit der einzustellende Öffnungsgrad der Drosselklappe 5 ermittelt und von der Motorsteuerung 25 umgesetzt. Anschließend wird das Programm verlassen.

Bei Programmpunkt 140 veranlasst die Motorsteuerung 25 die vollständige Schließung der Drosselklappe 5. Anschließend wird das Programm verlassen.

Gemäß dem Ablaufplan nach Figur 3 wird also eine Mischform aus Kennfeld- und schwellwertgesteuerter Einstellung des Motorbremsmomentes im Schubbetrieb beispielhaft vorgestellt, wobei die aktuelle Fahrsituation bezüglich des Betätigungsgrades des Bremspedals und bezüglich der Neigung des Fahrzeugs gegenüber der Horizontalen mittels Schwellwertentscheidung und bezüglich des Gradienten dwped_w/dt des Pedalwinkels wped_w des Fahrpedals und der Fahrgeschwindigkeit v mittels Kennfeld bestimmt wird, wobei außerdem zur Ermittlung der aktuellen Fahrsituation die Auswertung der Betätigung des Bremspedals Vorrang vor der Auswertung des Neigungssensors 70 und die Auswertung des Neigungssensors 70 Vorrang vor der Auswertung des Gradienten dwped_w/dt des Pedalwinkels wped_w des Fahrpedals und der Fahrgeschwindigkeit v hat.

In Figur 4 ist eine Abwandlung des Ablaufplans nach Figur 3 dargestellt. Dabei werden die Programmpunkte 130 und 135 durch die Ablaufplan nach Figur 4 ersetzt. Im übrigen bleibt der Ablaufplan nach Figur 3 unverändert erhalten. So wird also gemäß der Ausführungsform nach Figur 4 von Programmpunkt 125 bei Nein-Entscheidung zu einem Programmpunkt 145 verzweigt.

Bei Programmpunkt 145 ermittelt die Motorsteuerung 25 in der beschriebenen Weise und wie bei Programmpunkt 130 gemäß Figur 3 den zeitlichen Gradienten dwped_w/dt des Pedalwinkels wped_w, der beim Loslassen des Fahrpedals zum Erreichen des Schubbetriebes vorlag. Anschließend wird zu einem Programmpunkt 150 verzweigt.

Bei Programmpunkt 150 prüft die Motorsteuerung 25, ob der zeitliche Gradient dwped_w/dt unterhalb des vorgegebenen Schwellwertes Swped_w liegt. Ist dies der Fall, so wird zu Programmpunkt 140 verzweigt, andernfalls wird zu einem Programmpunkt 160 verzweigt.

Bei Programmpunkt 140 veranlasst die Motorsteuerung 25 ein vollständiges Schließen der Drosselklappe 5. Programmpunkt 140 ist dabei aus dem Ablaufplan nach Figur 3 übernommen. Anschließend wird das Programm verlassen.

Bei Programmpunkt 160 veranlasst die Motorsteuerung 25 ein vollständiges Öffnen der Drosselklappe 5. Anschließend wird das Programm verlassen.

Die beiden Ablaufpläne nach Figur 3 und Figur 4 zeigen jeweils einen beispielhaften Ablauf des erfindungsgemäßen Verfahrens. Ganz allgemeinen lässt sich die aktuelle Fahrsituation hinsichtlich jedes der genannten Kriterien: zeitlicher Gradient dwped_w/dt des Pedalwinkels wped_w, Betätigungsgrad des Bremspedals, Fahrgeschwindigkeit v, Neigung des Fahrzeugs gegenüber der Horizontalen Kennlinien- oder Kennfeld-gesteuert oder Schwellwert-gesteuert und in beliebiger Reihenfolge hierarchisch oder auch nicht hierarchisch beispielsweise mittels eines einzigen Kennfeldes für alle genannten Kriterien ermitteln. Weitere Kriterien wie z. B. die Motordrehzahl, die vom Drehzahlsensor 60 ermittelt wird, können zur Ermittlung der aktuellen Fahrsituation verwendet werden. Je mehr Kriterien zur Ermittlung der aktuellen Fahrsituation herangezogen werden, desto feiner und genauer lässt sich die aktuelle Fahrsituation ermitteln. Aus der ermittelten aktuellen Fahrsituation wird dann in der beschriebenen Weise der einzustellende Öffnungsgrad der Drosselklappe 5 im Schubbetrieb bzw. eine den Öffnungsgrad der Drosselklappe 5 charakterisierende einzustellende Größe ermittelt.

Das erfindungsgemäße Verfahren kann ausgesetzt werden, wenn hochrangigere Ziele, z. B. aus Abgasanforderungen oder Bauteileschutzanforderungen, dies erforderlich machen.

Im vorstehend beschriebenen Beispiel wurde ausgeführt, dass die einzustellende Luftzufuhr abhängig vom Gradienten des Pedalwinkels mittels jeweils einer Kennlinie oder jeweils eines Kennfeldes ermittelt werden kann. Nimmt man zusätzlich oder alternativ zur Luftzufuhr als Stellgröße den einzustellenden Zündwinkel und/oder die einzustellende Kraftstoffzufuhr und/oder die einzustellende Getriebeübersetzung, so kann auch diese Stellgröße abhängig vom Gradienten des Pedalwinkels, allgemein einer von der Betätigung des Fahrpedals abgeleiteten Größe mittels jeweils einer Kennlinie oder jeweils eines Kennfeldes ermittelt werden. Entsprechendes gilt für den Fall, dass statt des Gradienten der von der Betätigung des Fahrpedals abgeleiteten Größe alternativ oder zusätzlich der Gradient der von der Vorgabe für die Ausgangsgröße der Antriebseinheit 180 abgeleiteten Größe mittels jeweils einer Kennlinie oder jeweils eines Kennfeldes ermittelt wird.

Weiterhin alternativ kann es vorgesehen sein, dass anstelle eines Fahrpedals, das über eine Wegstrecke beweglich ist, lediglich ein Druckaufnehmer verwendet wird, der praktisch keine Positionsänderung bei Betätigung durch den Fahrer erfährt. In diesem Fall wäre der Gradient der von der Betätigung des Bedienelementes abgeleiteten Größe beispielsweise der Gradient des zeitlichen Verlaufs des von dem Druckaufnehmer ermittelten Drucks, also die zeitliche Druck änderung.

## Patentansprüche

1. Verfahren zum Betreiben einer Antriebseinheit (180) eines Fahrzeugs, bei dem in einem Schubbetrieb der Antriebseinheit (180) eine Ausgangsgröße der Antriebseinheit (180) gemäß einer voreingestellten Fahrstrategie eingestellt wird, wobei für den Schubbetrieb der Antriebseinheit (180) mindestens zwei voreingestellte Fahrstrategien vorgegeben werden, wobei in dem Schubbetrieb eine der vorgegebenen Fahrstrategien abhängig von einer Fahrsituation ausgewählt wird, wobei die Ausgangsgröße durch mindestens eine Stellgröße der Antriebseinheit (180) eingestellt wird und wobei die mindestens eine Stellgröße abhängig von der ausgewählten Fahrstrategie eingestellt wird, **dadurch gekennzeichnet, dass** als mindestens eine Stellgröße ein Zündwinkel und/oder eine Getriebeübersetzung gewählt wird.

2. Verfahren nach Anspruch 1, **dadurch gekennzeichnet, dass** bei Vorliegen einer ersten Fahrsituation eine erste Fahrstrategie gewählt wird, bei der der Zündwinkel in Richtung spät verstellt und/oder die Getriebeübersetzung verringert wird und dass bei Vorliegen einer zweiten Fahrsituation eine zweite Fahrstrategie gewählt wird, bei der der Zündwinkel in Richtung früh verstellt und/oder die Getriebeübersetzung erhöht wird.

3. Verfahren nach einem der vorherigen Ansprüche, **dadurch gekennzeichnet, dass** die Fahrsituation durch Auswertung eines Gradienten einer von einer Betätigung eines Bedienelements (10) abgeleiteten Größe oder einer von einer Vorgabe für die Ausgangsgröße der Antriebseinheit (180) abgeleiteten Größe ermittelt wird und dass die erste Fahrsituation erkannt wird, wenn ein vorgegebener Schwellwert durch den Gradienten unterschritten wird, und dass die zweite Fahrsituation erkannt wird, wenn der vorgegebene Schwellwert durch den Gradienten überschritten wird.

4. Verfahren nach Anspruch 3, **dadurch gekennzeichnet, dass** der einzustellende Zündwinkel und/oder die einzustellende Getriebeübersetzung abhängig vom Gradienten der von der Betätigung des Bedienelementes (10) abgeleiteten Größe oder der von der Vorgabe für die Ausgangsgröße der Antriebseinheit (180) abgeleiteten Größe mittels jeweils einer Kennlinie oder jeweils eines Kennfeldes (15) ermittelt wird.

5. Verfahren nach einem der vorherigen Ansprüche, **dadurch gekennzeichnet, dass** die Fahrsituation durch Auswertung einer Betätigung eines Bremspedals (15) ermittelt wird und dass die erste Fahrsituation erkannt wird, wenn das Bremspedal (15) gedrückt ist und dass die zweite Fahrsituation erkannt wird, wenn das Bremspedal (15) losgelassen ist.

6. Verfahren nach einem der vorherigen Ansprüche, **dadurch gekennzeichnet, dass** die Fahrsituation durch Auswertung einer Information über eine Neigung des Fahrzeuges gegenüber der Horizontalen ermittelt wird und dass die erste Fahrsituation bei betragsmäßigem Überschreiten eines vorgegebenen Schwellwertes durch die Neigung erkannt wird, und dass die zweite Fahrsituation bei betragsmäßigem Unterschreiten des vorgegebenen Schwellwertes durch die Neigung erkannt wird.

7. Verfahren nach einem der vorherigen Ansprüche, **dadurch gekennzeichnet, dass** die Fahrsituation durch Auswertung einer Fahrgeschwindigkeit oder eines vorausfahrenden Fahrzeugs oder eines erkannten Hindernisses auf der Fahrbahn oder einer Verkehrsfiihrung ermittelt wird.

8. Verfahren nach einem der vorherigen Ansprüche, **dadurch gekennzeichnet, dass** die erste Fahrsituation erkannt wird, wenn das Verhältnis der Motordrehzahl zur Fahrzeuggeschwindigkeit einen vorgegebenen Schwellwert überschreitet, und dass andernfalls die zweite Fahrsituation erkannt wird.

9. Verfahren nach einem der vorherigen Ansprüche, **dadurch gekennzeichnet, dass** die erste Fahrsituation erkannt wird, wenn ein Abstand zum vorausfahrenden Fahrzeug einen vorgegebenen Schwellwert unterschreitet und/oder eine Annäherungsgeschwindigkeit an das vorausfahrende Fahrzeug einen vorgegebenen Schwellwert überschreitet und/oder das Hindernis auf der Fahrbahn erkannt wird und/oder erkannt wird, dass das Fahrzeug sich einer Kurve oder einer Kreuzung oder einer Einmündung nähert, und dass andernfalls die zweite Fahrsituation erkannt wird,

10. Verfahren nach einem der vorherigen Ansprüche, **dadurch gekennzeichnet, dass** die erste Fahrsituation erkannt wird, wenn innerhalb einer vorgegebenen Zeit eine Getrieberückschaltung erkannt wird und dass andernfalls die zweite Fahrsituation erkannt wird.

11. Verfahren nach einem der vorherigen Ansprüche, **dadurch gekennzeichnet, dass** die erste Fahrsituation erkannt wird, wenn bei einem Automatikgetriebe die Position eines Wählhebels oder eines diesem entsprechenden Bedienelementes in einer anderen Stellung als "Drive" bzw. "D" steht und dass andernfalls die zweite Fahrsituation erkannt wird.

12. Verfahren nach einem der vorherigen Ansprüche, **dadurch gekennzeichnet, dass** bei Detektion eines Fehlers an einer sicherheitsrelevanten Komponente des Fahrzeugs oder der Antriebseinheit (180) der Zündwinkel in Richtung spät verschoben und/oder die Getriebeübersetzung verringert wird.

13. Verfahren nach einem der vorherigen Ansprüche, **dadurch gekennzeichnet, dass** bei Vorliegen der ersten Fahrsituation ein erster vorgegebener Schwellwert für eine Betriebsgröße der Antriebseinheit (180), vorzugsweise eine Motordrehzahl, oberhalb der die Kraftstoffzufuhr vollständig unterbrochen wird, bei einem niedrigeren Wert liegt als bei Vorliegen der zweiten Fahrsituation.

14. Verfahren nach einem der vorherigen Ansprüche, **dadurch gekennzeichnet, dass** bei Vorliegen der ersten Fahrsituation ein zweiter vorgegebener Schwellwert für eine Betriebsgröße der Antriebseinheit (180), vorzugsweise eine Motordrehzahl, unterhalb der die Kraftstoffzufuhr nach vorheriger Unterbrechung wieder aufgenommen wird, bei einem niedrigeren Wert liegt als bei Vorliegen der zweiten Fahrsituation.

15. Verfahren nach einem der vorherigen Ansprüche, **dadurch gekennzeichnet, dass** eine Wahrscheinlichkeit für das Vorliegen der ersten Fahrsituation oder der zweiten Fahrsituation abhängig davon ermittelt wird, welche Bedingung oder welche Bedingungen für das Erkennen der entsprechenden Fahrsituation vorliegen und dass die erste Fahrsituation oder die zweite Fahrsituation nur erkannt wird, wenn die entsprechende Wahrscheinlichkeit für deren Vorliegen einen vorgegebenen Schwellwert überschreitet.

16. Verfahren nach einem der vorherigen Ansprüche, **dadurch gekennzeichnet, dass** für die Ausgangsgröße bei Auswahl der ersten Fahrstrategie ein Minimalwert vorgegeben wird.

17. Verfahren nach einem der vorherigen Ansprüche, **dadurch gekennzeichnet, dass** durch die erste Fahrstrategie die Ausgangsgröße der Antriebseinheit (180) reduziert wird und dass durch die zweite Fahrstrategie die Ausgangsgröße der Antriebseinheit (180) beibehalten oder erhöht wird.

18. Vorrichtung (25) zum Betreiben einer Antriebseinheit (180) eines Fahrzeugs, mit Einstellmitteln (185) zur Einstellung einer Ausgangsgröße der Antriebseinheit (180) in einem Schubbetrieb der Antriebseinheit (180) gemäß einer voreingestellten Fahrstrategie, wobei Vorgabemittel (190) vorgesehen sind, die für den Schubbetrieb der Antriebseinheit (180) mindestens zwei voreingestellte Fahrstrategien vorgeben, wobei Auswahlmittel (195) vorgesehen sind, die in dem Schubbetrieb eine der vorgegebenen Fahrstrategien abhängig von einer Fahrsituation auswählen, wobei Einstellmittel (25) vorgesehen sind, die die Ausgangsgröße durch mindestens eine Stellgröße der Antriebseinheit (180) einstellen und wobei die Einstellmittel (25) die mindestens eine Stellgröße abhängig von der ausgewählten Fahrstrategie einstellen, **dadurch gekennzeichnet, dass** die mindestens eine Stellgröße ein Zündwinkel und/oder eine Getriebeübersetzung ist.

## Claims

1. Method for operating a drive unit (180) of a vehicle in which an output variable of the drive unit (180) is set in an overrun operating mode of the drive unit (180) according to a preset driving strategy, at least two preset driving strategies being predefined for the overrun operating mode of the drive unit (180), one of the predefined driving strategies being selected as a function of a driving situation in the overrun operating mode, the output variable being set by means of at least one manipulated variable of the drive unit (180), and the at least one manipulated variable being set as a function of the selected driving strategy, **characterized in that** an ignition angle and/or a gearbox transmission ratio is selected as at least one manipulated variable.

2. Method according to Claim 1, **characterized in that**, when a first driving situation is present, a first driving strategy is selected in which the ignition angle is adjusted in the retarded direction and/or the gearbox transmission ratio is reduced, and **in that**, when a second driving situation is present, a second driving strategy is selected in which the ignition angle is adjusted in the early direction and/or the gearbox transmission ratio is increased.

3. Method according to one of the preceding claims, **characterized in that** the driving situation is determined by evaluating a gradient of a variable which is derived from an activation of an operator control element (10) or a variable which is derived from a predefined value for the output variable of the drive unit (180), and **in that** the first driving situation is detected if a predefined threshold value is undershot by the gradient, and **in that** the second driving situation is detected if the predefined threshold value is exceeded by the gradient.

4. Method according to Claim 3, **characterized in that** the ignition angle to be set and/or the gearbox transmission ratio to be set are determined as a function of the gradient of the variable which is derived from the activation of the operator control element (10) or the variable which is derived from the predefined value for the output variable of the drive unit (180) in each case by means of a characteristic curve or in each case by means of a characteristic diagram (15).

5. Method according to one of the preceding claims, **characterized in that** the driving situation is determined by evaluating an activation of a brake pedal (15), and **in that** the first driving situation is detected if the brake pedal (15) is depressed, and **in that** the second driving situation is detected if the brake pedal (15) is released.

6. Method according to one of the preceding claims, **characterized in that** the driving situation is determined by evaluating an information item relating to an inclination of the vehicle with respect to the horizontal, and **in that** the first driving situation is detected by means of the inclination when a predefined threshold value is exceeded in terms of absolute value, and **in that** the second driving situation is detected by means of the inclination when the predefined threshold value is undershot in terms of absolute value.

7. Method according to one of the preceding claims, **characterized in that** the driving situation is determined by evaluating a velocity or a preceding vehicle or a detected obstacle on the carriageway or a traffic management system.

8. Method according to one of the preceding claims, **characterized in that** the first driving situation is detected if the ratio of the engine speed to the velocity of the vehicle exceeds a predefined threshold value, and **in that** otherwise the second driving situation is detected.

9. Method according to one of the preceding claims, **characterized in that** the first driving situation is detected if a distance from the preceding vehicle drops below a predefined threshold value and/or an approach velocity to the preceding vehicle exceeds a predefined threshold value and/or the obstacle on the carriageway is detected and/or it is detected that the vehicle is approaching a bend or an intersection or a junction, and **in that** otherwise the second driving situation is detected.

10. Method according to one of the preceding claims, **characterized in that** the first driving situation is detected if a gearbox shiftdown operation is detected within a predefined time, and **in that** otherwise the second driving situation is detected.

11. Method according to one of the preceding claims, **characterized in that** the first driving situation is detected if, in an automatic gearbox, the position of a selector lever or of an operator control element corresponding to the latter is in a position other than "Drive" or "D", and **in that** otherwise the second driving situation is detected.

12. Method according to one of the preceding claims, **characterized in that**, when a fault is detected in a safety-related component of the vehicle or of the drive unit (180), the ignition angle is displaced in the retarded direction and/or the gearbox transmission ratio is reduced.

13. Method according to one of the preceding claims, **characterized in that**, when the first driving situation is present, a first predefined threshold value for an operating variable of the drive unit (180), preferably an engine speed above which the fuel supply is completely interrupted, is at a lower value than when the second driving situation is present.

14. Method according to one of the preceding claims, **characterized in that**, when the first driving situation is present, a second predefined threshold value for an operating variable of the drive unit (180), preferably an engine speed below which the fuel supply is resumed after the previous interruption, is at a lower value than when the second driving situation is present.

15. Method according to one of the preceding claims, **characterized in that** a probability of the presence of the first driving situation or of the second driving situation is determined as a function of the condition or conditions which apply to the detection of the respective driving situation, and **in that** the first driving situation or the second driving situation is detected only if the respective probability for its presence exceeds a predefined threshold value.

16. Method according to one of the preceding claims, **characterized in that** a minimum value is predefined for the output variable when the first driving strategy is selected.

17. Method according to one of the preceding claims, **characterized in that** the output variable of the drive unit (180) is reduced by the first driving strategy, and **in that** the output variable of the drive unit (180) is retained or increased by the second driving strategy.

18. Device (25) for operating a drive unit (180) of a vehicle, having setting means (185) for setting an output variable of the drive unit (180) in an overrun operating mode of the drive unit (180) according to a preset driving strategy, predefining means (190) being provided which predefine at least two preset driving strategies for the overrun operating mode of the drive unit (180), selection means (195) being provided which in the overrun operating mode select one of the predefined driving strategies as a function of a driving situation, setting means (25) being provided which set the output variable by means of at least one manipulated variable of the drive unit (180), and the setting means (25) setting the at least one manipulated variable as a function of the selected driving strategy, **characterized in that** the at least one manipulated variable is an ignition angle and/or a gearbox transmission ratio.

## Revendications

1. Procédé de fonctionnement d'une unité motrice (180) d'un véhicule, selon lequel, en fonctionnement de poussée de l'unité motrice (180), on règle une grandeur de sortie de l'unité motrice (180) conformément à une stratégie de conduite préréglée, au moins deux stratégies de conduite préréglées étant prédéterminées pour le fonctionnement de poussée de l'unité motrice (180), l'une des stratégies de conduite prédéterminées étant sélectionnée dans le fonctionnement de poussée, en fonction d'une situation de conduite, la grandeur de sortie étant réglée par au moins une grandeur de réglage de l'unité motrice (180) et l'au moins une grandeur de réglage étant réglée en fonction de la stratégie de conduite sélectionnée,
**caractérisé en ce qu'**
on sélectionne en tant qu'au moins une grandeur de réglage un angle d'allumage et/ou un rapport de démultiplication de la boîte de vitesses.

2. Procédé selon la revendication 1,
**caractérisé en ce qu'**
en présence d'une première situation de conduite, on sélectionne une première stratégie de conduite dans laquelle l'angle d'allumage est décalé en retard et/ou le rapport de démultiplication de la boîte de vitesses est réduit et, en présence d'une deuxième situation de conduite, on sélectionne une deuxième stratégie de conduite dans laquelle l'angle d'allumage est décalé en avance et/ou le rapport de démultiplication de la boîte de vitesses est augmenté.

3. Procédé selon l'une des revendications précédentes,
**caractérisé en ce que**
la situation de conduite est déterminée en exploitant un gradient d'une grandeur dérivée d'un actionnement d'un élément de commande (10) ou d'une grandeur dérivée d'une prédétermination de la grandeur de sortie de l'unité motrice (180), et
on reconnaît la première situation de conduite si le gradient est inférieur à une valeur de seuil prédéterminée, et
on reconnaît la deuxième situation de conduite si le gradient est supérieur à la valeur de seuil prédéterminée.

4. Procédé selon la revendication 3,
**caractérisé en ce que**
l'angle d'allumage à régler et/ou le rapport de démultiplication de la boîte de vitesses à régler est déterminé en fonction du gradient de la grandeur dérivée de l'actionnement de l'élément de commande (10) ou de la grandeur dérivée de la prédétermination de la grandeur de sortie de l'unité motrice (180) au moyen respectivement d'une courbe caractéristique ou d'un champ de caractéristiques (15).

5. Procédé selon l'une des revendications précédentes,
**caractérisé en ce que**
la situation de conduite est déterminée en exploitant un actionnement d'une pédale de frein (15), et
on reconnaît la première situation de conduite si la pédale de frein (15) est enfoncée, et on reconnaît la deuxième situation de conduite si la pédale de frein (15) est relâchée.

6. Procédé selon l'une des revendications précédentes,
**caractérisé en ce que**
la situation de conduite est déterminée en exploitant d'une information relative à une inclinaison du véhicule par rapport à l'horizontale, et
on reconnaît la première situation de conduite si l'inclinaison est supérieure à une valeur de seuil prédéterminée, et on reconnaît la deuxième situation de conduite est détectée lorsque l'inclinaison est inférieure à la valeur de seuil prédéterminée.

7. Procédé selon l'une des revendications précédentes,
**caractérisé en ce que**
la situation de conduite est déterminée en exploitant une vitesse de conduite, ou un véhicule précédent ou un obstacle détecté sur la voie de circulation, ou une indication de trafic.

8. Procédé selon l'une des revendications précédentes,
**caractérisé en ce qu'**
on reconnaît la première situation de conduite si le rapport entre le régime moteur et la vitesse du véhicule dépasse une valeur de seuil prédéterminée, et
sinon, on reconnaît la deuxième situation de conduite.

9. Procédé selon l'une des revendications précédentes,
**caractérisé en ce qu'**
on reconnaît la première situation de conduite si une distance par rapport au véhicule précédent est inférieure à une valeur de seuil prédéterminée et/ou une vitesse d'approche du véhicule précédent dépasse une valeur de seuil prédéterminée et/ ou l'obstacle sur la voie de circulation est détecté et/ou on détecte que le véhicule se rapproche d'un virage ou d'un croisement ou d'un embranchement, et
sinon on reconnaît la deuxième situation de conduite.

10. Procédé selon l'une des revendications précédentes,
**caractérisé en ce que**
on reconnaît la première situation de conduite si dans un laps de temps prédéterminé, on détecte une rétrogradation de la boîte de vitesses, et
sinon on reconnaît la deuxième situation de conduite.

11. Procédé selon l'une des revendications précédentes,
**caractérisé en ce que**
on reconnaît la première situation de conduite si, pour une boîte de vitesses automatique, la position d'un sélecteur ou d'un élément de commande correspondant à celui-ci se trouve dans une position différente de « Drive » ou « D » et sinon on reconnaît, la deuxième situation de conduite.

12. Procédé selon l'une des revendications précédentes,
**caractérisé en ce qu'**
en cas de détection d'une erreur au niveau d'un composant essentiel en termes de sécurité du véhicule ou de l'unité motrice (180), l'angle d'allumage est décalé en retard et/ou le rapport de démultiplication de la boîte de vitesses est réduit.

13. Procédé selon l'une des revendications précédentes,
**caractérisé en ce qu'**
en présence de la première situation de conduite, une première valeur de seuil prédéterminée pour une grandeur de fonctionnement de l'unité motrice (180), de préférence un régime du moteur au-dessus duquel l'arrivée de carburant est totalement interrompue, est plus faible qu'en présence de la deuxième situation de conduite.

14. Procédé selon l'une des revendications précédentes,
**caractérisé en ce qu'**
en présence de la première situation de conduite, une deuxième valeur de seuil prédéterminée pour une grandeur de fonctionnement de l'unité motrice (180), de préférence un régime moteur en dessous duquel l'arrivée de carburant est reprise après une interruption précédente, est plus faible qu'en présence de la deuxième situation de conduite.

15. Procédé selon l'une des revendications précédentes,
**caractérisé en ce qu'**
une probabilité d'être en présence de la première situation de conduite ou de la deuxième situation de conduite est déterminée en fonction de la condition ou des conditions en présence pour la détection de la situation de conduite correspondante, et on reconnaît la première situation de conduite ou la deuxième situation de conduite uniquement lorsque la probabilité correspondante de leur présence dépasse une valeur de seuil prédéterminée.

16. Procédé selon l'une des revendications précédentes,
**caractérisé en ce que**
pour la grandeur de sortie, en cas de sélection de la première stratégie de conduite, on prédétermine une valeur minimale.

17. Procédé selon l'une des revendications précédentes,
**caractérisé en ce que**
la première stratégie de conduite entraîne la réduction de la grandeur de sortie de l'unité motrice (180), et
la deuxième stratégie de conduite entraîne la conservation ou l'augmentation de la grandeur de sortie de l'unité motrice (180).

18. Dispositif (25) de fonctionnement d'une unité motrice (180) d'un véhicule, comprenant des moyens de réglage (185) pour le réglage d'une grandeur de sortie de l'unité motrice (180) en fonctionnement de poussée de l'unité motrice (180) conformément à une stratégie de conduite préréglée, des moyens de prédétermination (190) pour prédéterminer en fonctionnement de poussée l'unité motrice (180), au moins deux stratégies de conduite préréglées, des moyens de sélection (195) étant prévus pour sélectionner, en fonctionnement de poussée, l'une des stratégies de conduite prédéterminées en fonction d'une situation de conduite, des moyens de réglage (25) étant prévus pour régler la grandeur de sortie par au moins une grandeur de réglage de l'unité motrice (180) et les moyens de réglage (25) réglant l'au moins une grandeur de réglage en fonction de la stratégie de conduite sélectionnée,
**caractérisé en ce qu'**
au moins une grandeur de réglage est un angle d'allumage et/ou un rapport de démultiplication de la boîte de vitesses.
